(19) Europäisches Patentamt
European Patent Office
Office européen des brevets

(11) EP 4 310 105 A1

(12) EUROPEAN PATENT APPLICATION

(43) Date of publication:
24.01.2024 Bulletin 2024/04

(21) Application number: 22306080.7

(22) Date of filing: 20.07.2022

(51) International Patent Classification (IPC):
*C08F 2/48* (2006.01) *C08F 220/18* (2006.01)
*C08F 265/06* (2006.01) *C09D 4/06* (2006.01)

(52) Cooperative Patent Classification (CPC):
(C-Sets available)
**C09D 4/06; C08F 2/48; C08F 220/1804; C08F 265/06** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
- **MACNEILL, Christopher**
  **KING OF PRUSSIA, 19406-1308 (US)**
- **SCHOLTE, Jon**
  **KING OF PRUSSIA, 19406-1308 (US)**
- **KONTOS, Renee**
  **KING OF PRUSSIA, 19406-1308 (US)**
- **FRANCESCHINI, Linda**
  **KING OF PRUSSIA, 19406-1308 (US)**
- **CICERON, Philippe**
  **60550 Verneuil en Halatte (FR)**
- **DEMOULIN, Kevin**
  **60550 Verneuil en Halatte (FR)**
- **MELEC, Pierre**
  **60550 Verneuil en Halatte (FR)**
- **FOULGOC, Laura**
  **60550 Verneuil en Halatte (FR)**

(74) Representative: **Rogeau, Antoine**
**Arkema France**
**420, rue d'Estienne d'Orves**
**92705 Colombes Cedex (FR)**

# (54) ACRYLIC COPOLYMERS IMPARTING LOW YELLOWING AFTER PHOTOCURING

(57) An acrylic copolymer comprising a high-$T_g$ monomer; a low-$T_g$ monomer; a chromophore monomer comprising a thioxanthone, an anthraquinone, or a camphorquinone; and an optional at least one additional monomer is provided. A cured composition is also provided that is a product of photocuring a composition comprising the acrylic copolymer wherein the cured composition exhibits low yellowing. Also provided is a method of coating a substrate comprising applying a composition including the acrylic copolymer to the substrate and exposing the coating to UV radiation to cure the composition.

EP 4 310 105 A1

(52) Cooperative Patent Classification (CPC): (Cont.)

C-Sets
**C08F 220/1804, C08F 220/14, C08F 220/382;**
**C08F 265/06, C08F 222/104;**
**C08F 265/06, C08F 222/1065, C08F 220/1811,**
**C08F 220/20;**
**C08F 265/06, C08F 222/1065, C08F 220/20,**
**C08F 220/1811;**
**C09D 4/06, C08F 265/06**

## Description

TECHNICAL FIELD

Embodiments of the present disclosure generally relate to acrylic copolymers and, more specifically, to acrylic copolymers comprising pendant photoinitiators that impart low yellowing after photocuring.

BACKGROUND

Radiation curable compositions are used in a host of different applications, from industrial coatings and graphic arts to UV curable nail gel and 3D printing. Small molecule photoinitiators are a crucial component in such compositions because they can promote polymerization upon exposure to a suitable light source.

The selection of small molecule photoinitiator(s) in a radiation curable composition influences the light source required to initiate polymerization as well as the properties of the photocured polymer. For example, small molecule photoinitiators that promote polymerization upon exposure to light at short wavelengths tend to be non-yellowing and provide good surface cure with poor depth of cure. In contrast, small molecule photoinitiators that promote polymerization upon exposure to light at long wavelengths tend to give high yellowing and good depth of cure, but poor surface cure, which can result in a tacky surface.

Small molecule photoinitiators can further be categorized as Norrish Type I or Norrish Type II. Norrish Type I photoinitiators cleave upon exposure to a suitable light source to form two radical species that induce crosslinking. Norrish Type II photoinitiators generate an excited state upon exposure to a suitable light source and cause hydrogen extraction from a co-initiator, which generates a radical to induce crosslinking.

Commonly used Norrish Type II photoinitiators include benzophenones, thioxanthones, camphorquinones, and anthraquinones. These photoinitiators are typically paired with co-initiators such as amines, alcohols, and ethers. Tertiary amines are most commonly used as co-initiators because of their high reactivity towards Norrish Type II photoinitiators in their excited state.

Norrish Type II photoinitiators having absorption bands at longer wavelengths (i.e., thioxanthones) may be particularly effective photoinitiators for certain applications. In particular, additives in some radiation curable compositions can absorb light at shorter wavelengths and thereby inhibit photoinitiators that absorb light at similar wavelengths from properly initiating polymerization, which can lead to improper curing. Because the additives may not absorb light at longer wavelengths, their inhibiting effect may be reduced when Norrish Type II photoinitiators having absorption bands at longer wavelengths (i.e., thioxanthones) are used.

SUMMARY

Despite the utility of thioxanthones and other Norrish Type II photoinitiators having absorption bands at longer wavelengths, they are not without shortcomings. In particular, they tend to impart yellowing to the cross-linked polymer and do not photobleach over time. Further, they may be difficult to remove from the cross-linked polymer and instead may remain within the polymer matrix and diffuse slowly to the surface over time. Such photoinitiator migration may be harmful depending on the application. Accordingly, there is a need for Norrish Type II photoinitiators having absorption bands at longer wavelengths that provide cross-linked polymers with low initial yellowing and exhibit little to no migration after curing.

Embodiments of the acrylic copolymers disclosed herein meet this need through the incorporation of pendant Norrish Type II photoinitiators having absorption bands at longer wavelengths attached to the oligomer backbone. When the acrylic copolymers are mixed with at least one (meth)acrylate monomer, and the resulting composition is photocured, the resulting polymer may exhibit low yellowing. Further, since the acrylic copolymer becomes incorporated into the polymer framework upon photocuring, the photoinitiator moiety may exhibit little to no migration.

In one or more embodiments, an acrylic copolymer is provided. The acrylic copolymer comprises the reaction product of (1) a high-$T_g$ monomer having a glass transition temperature ($T_g$) equal to or greater than 25 °C, a low-$T_g$ monomer having a $T_g$ less than 25 °C, or a combination of a high-$T_g$ monomer having a glass transition temperature ($T_g$) equal to or greater than 25 °C and a low-$T_g$ monomer having a $T_g$ less than 25 °C, (2) a chromophore monomer comprising a pendant moiety chosen from a thioxanthone, an anthraquinone, or a camphorquinone, and (3) an optional at least one additional monomer.

In some embodiments, a cured composition is provided. The cured composition is a product of photocuring a composition including the acrylic copolymer and at least one (meth)acrylate monomer. The cured composition exhibits an APHA-10 mm initial color from 0.1 to 50; an initial yellowness (b*) from 0.01 to 2; and a $T_g$ of equal to or greater than 0°C.

In one or more embodiments, a method of coating a substrate is provided. The method includes applying a composition to a substrate to form an uncured coating of the composition on the substrate. The composition includes

the acrylic copolymer and at least one (meth)acrylate monomer. The method further includes exposing the uncured coating to UV radiation to cure the composition and obtain a cured coating on the substrate.

Additional features and advantages of the described embodiments will be set forth in the detailed description which follows, and in part will be readily apparent to those skilled in the art from that description or recognized by practicing the described embodiments, including the detailed description which follows, the claims, as well as the appended drawings.

## DETAILED DESCRIPTION

### Definitions

As used herein, the term "comprises a" can mean "comprises one or more".

Unless otherwise mentioned, the weight percentages in a compound or a composition are expressed relative to the weight of the compound, respectively of the composition.

The term "substitution" herein means that at least one hydrogen atom (-H) bonded to a carbon atom or heteroatom of a corresponding unsubstituted compound or functional group is replaced by a substituent (e.g. $R^S$). The term "persubstitution" means that every hydrogen atom (H) bonded to a carbon atom or heteroatom of a corresponding unsubstituted compound or functional group is replaced by a substituent (e.g., $R^S$). The term "polysubstitution" means that at least two, but fewer than all, hydrogen atoms bonded to carbon atoms or heteroatoms of a corresponding unsubstituted compound or functional group are replaced by a substituent. Unless otherwise defined or limited in a specific context, a substituent group generally, or a substituent group referred to as $R^S$, may be any chemical moiety, typically, but not necessarily limited to, a chemical moiety having from 1 to 50, or from 1 to 40, or from 1 to 30, or from 1 to 20, or from 1 to 10 total atoms. Examples of substituent groups $R^S$ include, but are not limited to, a hydrocarbyl, a heterohydrocarbyl, an aryl, a heteroaryl, an alkyl, a cycloalkyl, a heteroatom, a carbonyl, a hydroxy, an ester, an amine, an amide, or a halide according to their respective definitions herein or their commonly understood meaning, any of which substituents themselves may be substituted or unsubstituted. In some embodiments, substituents $R^S$ may be chosen from a ($C_1$-$C_{30}$)hydrocarbyl, a ($C_1$-$C_{30}$)heterohydrocarbyl, a ($C_6$-$C_{30}$)aryl, or a ($C_6$-$C_{30}$)heteroaryl.

The term "hydrocarbyl" means a monovalent hydrocarbon, in which each hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, hydrocarbyl may be an unsubstituted or substituted alkyl, an unsubstituted or substituted cycloalkyl, or an unsubstituted or substituted aryl.

The term "aryl" means an optionally substituted polyunsaturated aromatic group. The aryl may contain a single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). Examples include phenyl, naphthyl, biphenyl, phenanthrenyl and naphthacenyl.

The term "alkyl" means a monovalent saturated acyclic hydrocarbon group of formula $-C_nH_{2n+1}$ wherein n is 1 to 20. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term "cycloalkyl" means a monovalent saturated alicyclic hydrocarbon group comprising a cycle. Examples of cycloalkyl groups include cyclopentyl, cyclohexyl, and isobornyl, any of which may be substituted or unsubstituted.

The term "heterocycloalkyl" means a cycloalkyl having at least one ring atom that is a heteroatom selected from O, N, or S.

The term "halogen" means an atom selected from Cl, Br, F and I.

The term "alkoxy" means a group of formula -O-alkyl, wherein the alkyl is as defined above.

The term "aryloxy" means a group of formula -O-aryl, wherein the aryl is as defined above.

The term "thioalkyl" means a group of formula -S-alkyl, wherein the alkyl is as defined above.

The term "thioaryl" means a group of formula -S-aryl, wherein the aryl is as defined above.

The term "alkenyl" means a monovalent acyclic hydrocarbon group comprising at least one C=C double bond. An alkenyl may be linear or branched.

The term "alkynyl" means a monovalent acyclic hydrocarbon group comprising at least one C=C triple bond. An alkynyl may be linear or branched.

The term "aralkyl" means an aryl substituted by an alkyl group. An example of an aralkyl group is tolyl.

The term "alkaryl" means an alkyl substituted by an aryl group. An example of an alkaryl group is benzyl (-CH2-Phenyl).

The term "heteroaryl" means an aryl having at least one ring atom that is a heteroatom.

The term "alkylamino" means an alkyl substituted by at least one amino group.

The term "alkylthiol" means an alkyl substituted by at least one thiol group

The term "hydroxyalkyl" means an alkyl substituted by at least one hydroxy group.

The term "haloalkyl" means an alkyl substituted by at least one halogen.

The term "alkylene" or "alkanediyl" means a linker derived from an alkane of formula $C_mH_{2m+2}$ by removing one hydrogen atom at each point of attachment of the linker. An alkylene may be divalent, trivalent, tetravalent or have even higher valencies.

The term "alkoxylated" means a compound, group or linker containing one or more oxyalkylene moieties, in particular one or more oxyalkylene selected from oxyethylene ($-O-CH_2-CH_2-$), oxypropylene ($-O-CH_2-CH(CH_3)-$ or $-O-CH(CH_3)-CH_2-$), oxybutylene (-O-CH2-CH2-CH2-CH2-) and mixtures thereof. For example, an alkoxylated compound, group or linker may contain from 1 to 30 oxyalkylene moieties.

The term "(meth)acrylate" means acrylate or methacrylate. The term "acrylate" means an acryloyloxy group ($-O-C(=O)-CH=CH_2$). The term "methacrylate" means a methacryloyloxy group ($-O-C(=O)-C(CH_3)=CH_2$).

As used herein, the "monomers" have a number average molecular weight of less than 1,000 g/mol, preferably 100 to 950 g/mol.

As used herein, the "oligomers" have a number average molecular weight from equal to or more than 1,000 g /mol, preferably 1,050 to 60,000 g/mol, more preferably 10,000 to 50,000 g/mol.

The term "glass transition temperature" or "$T_g$" refers to the temperature at which a material changes from a glassy state to a rubbery state. In this context, the term "glassy" means that the material is hard and brittle while the term "rubbery" means that the material is elastic and flexible. For polymeric materials, the $T_g$ is the critical temperature that separates their glassy and rubbery behaviors. If a polymeric material is at a temperature below its $T_g$, large-scale molecular motion is severely restricted because the material is essentially frozen. On the other hand, if the polymeric material is at a temperature above its $T_g$, molecular motion on the scale of its repeat unit takes place, allowing it to be soft or rubbery.

All references herein to a $T_g$ of a monomer refer to the $T_g$ of a homopolymer formed from that monomer. $T_g$ values of common monomers are well-known from literature. If not reported in the literature, glass transition temperature values may be determined in accordance with ASTM E1356-08, "Standard Test Method for Assignment of the Glass Transition Temperatures by Differential Scanning Calorimetry" as the inflection temperature ($T_i$). The glass transition temperatures of the oligomers described herein and mentioned in the examples below are calculated using the Fox Equation based on the mass fractions and $T_g$ values of each individual monomer of the oligomer or polymeric material that includes more than one discrete type of monomer.

The terms "mass fraction" and "weight fraction" are used herein interchangeably and are to be regarded as equivalent to each other with respect to embodiments or examples herein.

The "Fox Equation" refers to equation (1):

$$1 / T_{g,mix} \approx \sum_i \omega_i / T_{g,i} \qquad \text{equation (1)}$$

where $T_{g,\,mix}$ is the glass transition temperature of a mixture of *i* chemically discrete components, such as two or more discrete monomers of an oligomer or polymer, $T_{g,i}$ is the glass transition temperature of the *i*-th component, and $\omega_i$ is the mass fraction of the *i*-th component, based on the total mass of the oligomer or polymer. Hereinafter, the value $T_{g,\,mix}$ with respect to multiple discrete monomers in an oligomer or polymer is referred to as the "Fox Equation average $T_g$" of the multiple discrete monomers.

For two components, A and B, the Fox Equation reduces to equation (2):

$$1 / T_{g,mix} \approx \omega_A / T_{g,A} + \omega_B / T_{g,B} \qquad \text{equation (2)}$$

The term "high-$T_g$ monomer unit" refers to a monomer that, when homopolymerized, produces a homopolymer having a $T_g$ of equal to or greater than 25 °C. In embodiments of the oligomer, for which only one kind of high-$T_g$ monomer unit is present in the oligomer, the $T_g$ of the high-$T_g$ monomer units is the $T_g$ of a homopolymer of the one kind of high-$T_g$ monomer unit. In embodiments of the oligomer, for which two or more types of distinct high-$T_g$ monomer units are present in the oligomer, the $T_g$ of the high-$T_g$ monomer units of the oligomer collectively refers to the Fox Equation average $T_g$ of the combination of the high-$T_g$ monomer units, in which for equation (1) the individual mass fractions $\omega_i$ are mass fractions of each individual high-$T_g$ monomer unit in the oligomer, based on the total mass of all the high-$T_g$ monomer units present in the oligomer (that is, the monomer units having a $T_g$ of equal to or greater than 25 °C), not on the total mass of the oligomer as a whole.

The term "Fox Equation average" may be used herein even with respect to a single monomer that is not part

of a mixture of two or more monomers. It should be readily understood that a Fox Equation average $T_g$ with respect to a single monomer is equivalent to the $T_g$ of the single monomer itself, as defined herein, as the term mass fraction term $\omega$ in such a situation would equal one.

The term "low-$T_g$ monomer unit" refers to a monomer that, when homopolymerized, produces a homopolymer having a $T_g$ of less than 25 °C. In embodiments of the oligomer, for which only one kind of low-$T_g$ monomer unit is present in the oligomer, the $T_g$ of the low-$T_g$ monomer units is the $T_g$ of a homopolymer of the one kind of low-$T_g$ monomer unit. In embodiments of the oligomer, for which two or more types of distinct low-$T_g$ monomer units are present in the oligomer, the $T_g$ of the low-$T_g$ monomer units of the oligomer collectively refers to the Fox Equation average $T_g$ of the combination of the low-$T_g$ monomer units, in which for equation (1) the individual mass fractions $\omega_i$ are mass fractions of each individual low-$T_g$ monomer unit in the oligomer, based on the total mass of all the low-$T_g$ monomer units present in the oligomer (that is, the monomer units having a $T_g$ of less than 25 °C), not on the total mass of the oligomer as a whole.

The term "photoinitiator", may be considered any type of substance that, upon exposure to radiation (e.g., actinic radiation), forms species that initiate the reaction and curing of polymerizing organic substances present in a curable composition.

The term "chromophore" refers herein to a Norrish Type II light absorbing molecule that enters an excited state upon absorbing light. From this excited state, the molecule can interact or react with other molecules to produce reactive radical species.

The term "independently selected" is used herein to indicate that the substituent groups, such as, $Z^1$, $Z^2$, $Z^3$, and $Z^4$, can be identical or different (e.g., $Z^1$, $Z^2$, $Z^3$, and $Z^4$ may all be $-CH_3$ or $Z^1$ and $Z^2$ may be $-CH_3$ and $Z^3$ and $Z^4$ may be -H, etc.) A chemical name associated with a substituent group is intended to convey the chemical structure that is recognized in the art as corresponding to that of the chemical name. Thus, chemical names are intended to supplement and illustrate, not preclude, the structural definitions known to those of skill in the art.

When used to describe certain carbon atom-containing chemical groups, a parenthetical expression having the form "($C_x$-$C_y$)" means that the unsubstituted form of the chemical group has from x carbon atoms to y carbon atoms, inclusive of x and y. For example, a ($C_1$-$C_{20}$)hydrocarbyl is a hydrocarbyl group having from 1 to 20 carbon atoms in its unsubstituted form. In some embodiments and general structures, certain chemical groups may be substituted by one or more substituents such as $R^S$. An $R^S$ substituted version of a chemical group defined using the "($C_x$-$C_y$)" parenthetical may contain more than y carbon atoms depending on the identity of any groups $R^S$. For example, a "($C_1$-$C_{20}$)alkyl substituted with exactly one group $R^S$, where $R^S$ is phenyl ($-C_6H_5$)" may contain from 7 to 27 carbon atoms. Thus, in general when a chemical group defined using the "($C_x$-$C_y$)" parenthetical is substituted by one or more carbon atom-containing substituents $R^S$, the minimum and maximum total number of carbon atoms of the chemical group is determined by adding to both x and y the combined sum of the number of carbon atoms from all of the carbon atom-containing substituents $R^S$.

The term "-H" means a hydrogen atom that is covalently bonded to an atom other than hydrogen. "Hydrogen" and "-H" are interchangeable, and, unless clearly specified, have identical meanings.

The term "($C_1$-$C_{30}$)hydrocarbyl" means a monovalent hydrocarbon of from 1 to 30 carbon atoms, in which each monovalent hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, a ($C_0$-$C_{30}$)hydrocarbyl may be an unsubstituted or substituted ($C_1$-$C_{30}$)alkyl, ($C_3$-$C_{30}$)cycloalkyl, or ($C_6$-$C_{30}$)aryl.

The term "($C_2$-$C_{30}$)alkyl" mean a saturated straight or branched monovalent hydrocarbon of from 2 to 30 carbon atoms that is unsubstituted or substituted by one or more $R^S$. Examples of unsubstituted ($C_2$-$C_{30}$)alkyl are unsubstituted ($C_2$-$C_{20}$)alkyl; unsubstituted ($C_6$-$C_{25}$)alkyl; unsubstituted ($C_4$-$C_8$)alkyl; 1-butyl; 2-butyl; 2-methylpropyl; 1,1-dimethylethyl; 1-pentyl; 1-hexyl; 1-heptyl; 1-nonyl; and 1-decyl. Examples of substituted ($C_2$-$C_{30}$)alkyl are substituted ($C_2$-$C_{20}$)alkyl, substituted ($C_2$-$C_{10}$)alkyl.

The term "($C_6$-$C_{40}$)aryl" means an unsubstituted or substituted (by one or more $R^S$) monocyclic, bicyclic, or tricyclic aromatic monovalent hydrocarbon of from 6 to 40 carbon atoms, of which at least from 6 to 14 of the carbon atoms are aromatic ring carbon atoms. A monocyclic aromatic monovalent hydrocarbon includes one aromatic ring; a bicyclic aromatic monovalent hydrocarbon has two rings; and a tricyclic aromatic monovalent hydrocarbon has three rings. When the bicyclic or tricyclic aromatic monovalent hydrocarbon is present, at least one of the rings of the monovalent hydrocarbon is aromatic. The other ring or rings of the aromatic monovalent hydrocarbon may be independently fused or non-fused and aromatic or non-aromatic. Examples of unsubstituted ($C_6$-$C_{40}$)aryl include: unsubstituted ($C_6$-$C_{20}$)aryl, unsubstituted ($C_6$-$C_{18}$)aryl; 2-($C_1$-$C_5$)alkyl-phenyl; phenyl; fluorenyl; tetrahydrofluorenyl; idacenyl; hexahydracenyl; hexahydroindacenyl; indenyl; dihydroindenyl; naphthyl; tetrahydronaphthyl; and phenanthrene. Examples of substituted ($C_6$-$C_{40}$)aryl include: substituted ($C_1$-$C_{20}$)aryl; and substituted ($C_6$-$C_{18}$)aryl.

The term "($C_6$-$C_{12}$)cycloalkyl" means a saturated cyclic monovalent hydrocarbon of from 6 to 12 carbon atoms that is unsubstituted or substituted. Other cycloalkyl groups (e.g., ($C_x$-$C_y$)cycloalkyl) are defined in an analogous manner as having from x to y carbon atoms and being either unsubstituted or substituted by one or more $R^S$. Examples of

unsubstituted ($C_6$-$C_{12}$)cycloalkyl are unsubstituted ($C_6$-$C_8$)cycloalkyl, unsubstituted ($C_6$-$C_{10}$)cycloalkyl, cyclopropyl, cyclobutyl, cyclopentyl, cyclohexyl, cycioheptyl, cyclooctyl, cyclononyl, and cyclodecyl. Examples of substituted ($C_6$-$C_{12}$)cycloalkyl are substituted ($C_6$-$C_8$)cycloalkyl, substituted ($C_6$-$C_{10}$)cycloalkyl, isobornyl, and 3,3,5-trimethylcyclohexyl.

The term "heteroatom," refers to an atom other than hydrogen or carbon. Examples of heteroatoms include O, S, N, Si. The term "heterohydrocarbon" refers to a molecule or molecular framework in which one or more carbon atoms of a hydrocarbon are replaced with a heteroatom. The term "($C_1$-$C_{30}$)heterohydrocarbyl" means a monovalent heterohydrocarbon of from 1 to 30 carbon atoms, and the term "($C_1$-$C_{30}$)heterohydrocarbylene" means a divalent heterohydrocarbon of from 1 to 30 carbon atoms. The heterohydrocarbon of the ($C_1$-$C_{30}$)heterohydrocarbyl or the ($C_1$-$C_{30}$)heterohydrocarbylene has one or more heteroatoms. The valency or connection point of the heterohydrocarbyl may be on a carbon atom or a heteroatom. The two valencies of the heterohydrocarbylene may be on a single carbon atom or on a single heteroatom. Additionally, one of the two valencies or connection points of the diradical may be on a carbon atom and the other valency may be on a different carbon atom; one of the two valencies or connection points may be on a carbon atom and the other on a heteroatom; or one of the two valencies or connection points may be on a heteroatom and the other valency or connection point on a different heteroatom. Each ($C_1$-$C_{30}$)heterohydrocarbyl and ($C_1$-$C_{30}$)heterohydrocarbylene may be unsubstituted or substituted, aromatic or non-aromatic, saturated or unsaturated, straight chain or branched chain, cyclic (including mono- and poly-cyclic, fused and non-fused polycyclic), or acyclic.

The term "saturated" means lacking carbon-carbon double bonds, carbon-carbon triple bonds, and (in heteroatom-containing groups) carbon-nitrogen, carbon-phosphorous, and carbon-silicon double bonds. Where a saturated chemical group is substituted by one or more substituents $R^S$, one or more double and/or triple bonds optionally may or may not be present in substituents $R^S$. The term "unsaturated" means containing one or more carbon-carbon double bonds, carbon-carbon triple bonds, or (in heteroatom-containing groups) one or more carbon-nitrogen, carbon-phosphorous, or carbon-silicon double bonds, not including double bonds that may be present in substituents $R^S$, if any, or in (hetero) aromatic rings, if any.

The term "linker" means a multivalent group. A linker may connect at least two moieties of a compound together, in particular 2 to 16 moieties of a compound together. For example, a linker that connects two moieties of a compound together is referred to as a divalent linker and a linker that connects three moieties of a compound together is referred to as a trivalent linker.

As used herein, "weight average molecular weight ('$M_w$')" is determined by size exclusion chromatography (SEC) using polymethyl methacrylate reference standards and tetrahydrofuran as the solvent, unless expressly noted otherwise.

It was discovered that embodiments of acrylic copolymers described herein that include a pendant Norrish Type II photoinitiator having absorption bands at longer wavelengths (i.e., a thioxanthone, an anthraquinone, or a camphorquinone) that are mixed with at least one (meth)acrylate monomer, and the resulting composition is photocured, the resulting polymer may exhibit low yellowing. Without being bound by theory, it is believed that a reason for the relatively high yellowing exhibited by compositions cured with small molecule Norrish Type II photoinitiators having absorption bands at longer wavelengths is that the small molecule photoinitiators react to form dimers and other side products during curing, which impart yellowing to the cured composition. It is believed that the opportunity for photoinitiator dimerization is substantially reduced when the photoinitiators are covalently attached to acrylic copolymers such as embodiments of the acrylic copolymers described herein. Further, since embodiments of the acrylic copolymer described herein becomes incorporated into the polymer framework upon photocuring, the photoinitiator moiety may exhibit little to no migration.

## Acrylic Copolymer

The acrylic copolymers herein include at least one polymerized chromophore monomer unit, as defined herein. The acrylic copolymers herein further include at least one polymerized monomer unit selected from a polymerized high-$T_g$ monomer unit, a polymerized low-$T_g$ monomer unit, or a combination of at least one polymerized high-$T_g$ monomer unit and at least one polymerized low-$T_g$ monomer unit. The acrylic copolymers herein optionally include at least one polymerized additional monomer unit, as defined herein.

In embodiments, the acrylic copolymer comprises from 0% to 99.9% by weight polymerized high-$T_g$ monomer units, from 0% to 99.9% by weight polymerized low-$T_g$ monomer units, from 0.1% to 40% by weight polymerized chromophore monomer units, and from 0 to 20% by weight polymerized additional monomer units, based on the total weight of the oligomer, provided the oligomer includes at least 40% by weight, or at least 50% by weight, or at least 60% by weight, or at least 70% by weight, or at least 80% by weight, or at least 90% by weight combined total of polymerized high-$T_g$ monomer units and polymerized low-$T_g$ monomer units.

In one or more embodiments, an acrylic copolymer comprises the reaction product of a high$T_g$ monomer having a glass transition temperature ($T_g$) equal to or greater than 25 °C, a chromophore monomer comprising a pendant moiety chosen from a thioxanthone, an anthraquinone, or a camphorquinone, and an optional at least one additional monomer.

According to one or more embodiments, the chromophore monomer comprises a pendant moiety comprising a thioxanthone.

In one or more embodiments, an acrylic copolymer comprises the reaction product of a low-$T_g$ monomer having a $T_g$ less than 25 °C, a chromophore monomer comprising a pendant moiety chosen from a thioxanthone, an anthraquinone, or a camphorquinone, and an optional at least one additional monomer. According to one or more embodiments, the chromophore monomer comprises a pendant moiety comprising a thioxanthone.

In one or more embodiments, an acrylic copolymer comprises the reaction product of a high$T_g$ monomer having a glass transition temperature ($T_g$) equal to or greater than 25 °C, a low-$T_g$ monomer having a $T_g$ less than 25 °C, a chromophore monomer comprising a pendant moiety chosen from a thioxanthone, an anthraquinone, or a camphorquinone, and an optional at least one additional monomer. According to one or more embodiments, the chromophore monomer comprises a pendant moiety comprising a thioxanthone.

In embodiments, the acrylic copolymer has formula (I):

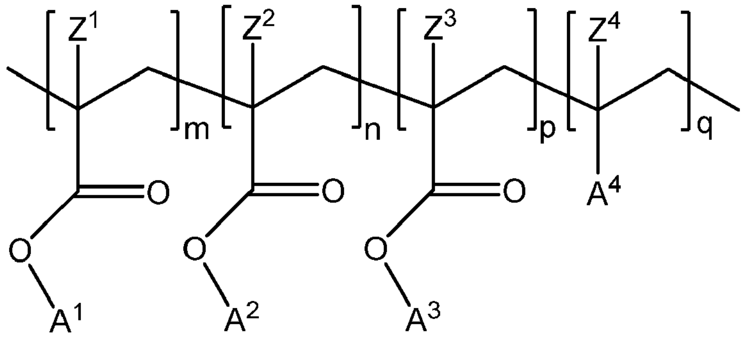

(I)

$A^1$ is ($C_0$-$C_{30}$)hydrocarbyl or ($C_1$-$C_{30}$)heterohydrocarbyl; $A^2$ is ($C_4$-$C_{30}$)hydrocarbyl or ($C_4$-$C_{30}$)heterohydrocarbyl; $A^3$ is a residue comprising a monovalent radical comprising a pendant moiety chosen from a thioxanthone, an anthraquinone, or a camphorquinone; $A^4$ is a ($C_0$-$C_{30}$)hydrocarbyl or ($C_1$-$C_{30}$)heterohydrocarbyl; $Z^1$, $Z^2$, $Z^3$, and $Z^4$ are independently -H or ($C_1$-$C_4$)alkyl, preferably -H or -$CH_3$; m is a weight fraction of the high-$T_g$ monomer and is from 0 to 0.999; n is a weight fraction of the low-$T_g$ monomer and is from 0 to 0.999; p is a weight fraction of the chromophore monomer and is from 0.001 to 0.4; q is a weight fraction of the additional monomer and is from 0 to 0.2; m + n is greater than or equal to 0.4; and m + n + p + q= 1. In embodiments, m is from 0.001 to 0.999; n is from 0.001 to 0.999; and m + n is greater than or equal to 0.6.

The polymerized high-$T_g$ monomer units may be identical or a combination of multiple types of discrete monomer units such as two types of discrete monomer units, three types of discrete monomer units, four types of discrete monomer units, or more than four types of discrete monomer units. In embodiments, the high-$T_g$ monomer units have a glass transition temperature ($T_g$) or a Fox Equation average $T_g$ equal to or greater than 25 °C. As defined herein, any reference herein to the $T_g$ of a monomer refers to the $T_g$ of a homopolymer formed from that monomer. In embodiments where the oligomer comprises two or more distinct high-$T_g$ monomer units, such as a combination of methyl (meth)acrylate and isobornyl (meth)acrylate, the $T_g$ refers to the Fox Equation average $T_g$ of the high-$T_g$ monomer units, as defined previously herein. In embodiments, the Fox Equation average $T_g$ of the high-$T_g$ monomer units is greater than 25 °C, such as equal to or greater than 30 °C, equal to or greater than 35 °C, equal to or greater than 40 °C, equal to or greater than 45 °C, equal to or greater than 50 °C, equal to or greater than 55 °C, equal to or greater than 60 °C, equal to or greater than 65 °C, equal to or greater than 70 °C, equal to or greater than 75 °C, or even equal to or greater than 80 °C. In embodiments, the high $T_g$ monomer units may have a $T_g$ from 25 °C to 200 °C, from 25 °C to 150 °C, from 25 °C to 130 °C, from 30 °C to 200 °C, from 30 °C to 150 °C, from 30 °C to 130 °C, from 35 °C to 200 °C, from 35 °C to 150 °C, from 35 °C to 130 °C, from 40 °C to 200 °C, from 40 °C to 150 °C, from 40 °C to 130 °C, from 45 °C to 200 °C, from 45 °C to 150 °C, from 45 °C to 130 °C, from 50 °C to 200 °C, from 50 °C to 150 °C, from 50 °C to 130 °C, from 55 °C to 200 °C, from 55 °C to 150 °C, from 55 °C to 130 °C, from 60 °C to 200 °C, from 60 °C to 150 °C, from 60 °C to 130 °C, from 65 °C to 200 °C, from 65 °C to 150 °C, from 65 °C to 130 °C, from 70 °C to 200 °C, from 70 °C to 150 °C, from 70 °C to 130 °C, from 75 °C to 200 °C, from 75 °C to 150 °C, or even from 75 °C to 130 °C, or any and all subranges formed from any of these endpoints.

If the acrylic copolymer includes both high-$T_g$ monomer and low-$T_g$ monomers (i.e., both m and n of formula (I) are non-zero), the Fox Equation average $T_g$ of the high-$T_g$ monomer units is greater than the Fox Equation average $T_g$ of the low-$T_g$ monomer units. In embodiments the Fox Equation average $T_g$ of the high-$T_g$ monomer units is at least 20 °C greater than the Fox Equation average $T_g$ of the low-$T_g$ monomer units. In embodiments, the difference between the Fox Equation average $T_g$ of the high-$T_g$ monomer units and the Fox Equation average $T_g$ of the low-$T_g$ monomer units is greater than 20 °C, such as greater than 25 °C, greater than 30 °C, greater than 35 °C, greater than 40 °C,

greater than 45 °C, greater than 50 °C, greater than 55 °C, greater than 60 °C, greater than 65 °C, greater than 70 °C, greater than 75 °C, greater than 80 °C, greater than 85 °C, greater than 90 °C, greater than 95 °C, greater than 100 °C, greater than 105 °C, greater than 110 °C, greater than 115 °C, or greater than 120 °C. In embodiments, the difference between the Fox Equation average $T_g$ of the high-$T_g$ monomer units and the Fox Equation average $T_g$ of the low-$T_g$ monomer units is from 20 °C to 200 °C. As non-limiting examples the difference between the Fox Equation average $T_g$ of the high-$T_g$ monomer units and the Fox Equation average $T_g$ of the low-$T_g$ monomer units may be from 20 °C to 200 °C, from 20 °C to 150 °C, from 20 °C to 120 °C, from 20 °C to 100 °C, from 20 °C to 90 °C, from 20 °C to 80 °C, from 20 °C to 70 °C, from 20 °C to 60 °C, from 20 °C to 50 °C, from 20 °C to 40 °C, from 20 °C to 30 °C, from 30 °C to 200 °C, from 30 °C to 150 °C, from 30 °C to 120 °C, from 30 °C to 100 °C, from 30 °C to 90 °C, from 30 °C to 80 °C, from 30 °C to 70 °C, from 30 °C to 60 °C, from 30 °C to 50 °C, from 30 °C to 40 °C, from 40 °C to 200 °C, from 40 °C to 150 °C, from 40 °C to 120 °C, from 40 °C to 100 °C, from 40 °C to 90 °C, from 40 °C to 80 °C, from 40 °C to 70 °C, from 40 °C to 60 °C, from 40 °C to 50 °C, from 50 °C to 200 °C, from 50 °C to 150 °C, from 50 °C to 120 °C, from 50 °C to 100 °C, from 50 °C to 90 °C, from 50 °C to 80 °C, from 50 °C to 70 °C, from 50 °C to 60 °C, from 60 °C to 200 °C, from 60 °C to 150 °C, from 60 °C to 120 °C, from 60 °C to 100 °C, from 60 °C to 90 °C, from 60 °C to 80 °C, from 60 °C to 70 °C, from 70 °C to 200 °C, from 70 °C to 150 °C, from 70 °C to 120 °C, from 70 °C to 100 °C, from 70 °C to 90 °C, from 70 °C to 80 °C, from 80 °C to 200 °C, from 80 °C to 150 °C, from 80 °C to 120 °C, from 80 °C to 100 °C, or from 80 °C to 90 °C, or any and all subranges formed from any of these endpoints.In embodiments, the high-$T_g$ monomer units can include (hydrocarbyl)acrylate ester monomers, including but not limited to (alkyl)acrylate ester monomers, (cycloalkyl)acrylate ester monomers, or (aryl)acrylate ester monomers. Examples of (alkyl)acrylate ester monomers include acrylate and (meth)acrylate ester monomers such as methyl (meth)acrylate. Examples of (cycloalkyl)acrylate ester monomers include acrylate ester monomers and IBOA, IBOMA. Examples of (aryl)acrylate ester monomers include acrylate ester monomers and phenyl (meth)acrylate and benzyl (meth)acrylate.

In embodiments, the high-$T_g$ monomer units are monovalent. In other embodiments, the high-$T_g$ monomer units can be multivalent, where the individual monomer unit comprises two or more active sites that participate in crosslinking upon curing. Examples of monovalent monomer units can include ethyl (meth)acrylate ester and tert-butyl acrylate ester. Examples of multivalent monomer units can include divalent monomer units, such as dicyclopentadienyl acrylate.

In embodiments, $A^1$ of formula (I) is $(C_0$-$C_{30})$hydrocarbyl or $(C_1$-$C_{30})$heterohydrocarbyl. For instance, in embodiments, $A^1$ is chosen from methyl, ethyl, isopropyl, isobutyl, tert-butyl, a substituted or unsubstituted $(C_6$-$C_{12})$cycloalkyl, or combinations thereof. In embodiments, $A^1$ is chosen from methyl, tert-butyl, isobornyl, cyclohexyl, or 3,3,5-trimethylcyclohexyl, or combinations thereof.

In embodiments, $Z^1$ of formula (I) is -H or $-CH_3$.

In embodiments, the high-$T_g$ monomer may be chosen from 2-phenylethyl methacrylate, neopentyl methacrylate, 3,3,5-trimethylcyclohexyl acrylate, tert-butyl methacrylate, octadecyl methacrylate, octadecyl acrylate, glycidyl methacrylate, propyl methacrylate, tetrahydrofurfuryl methacrylate, benzyl methacrylate, isobutyl methacrylate, glycidyl methacrylate, ethyl methacrylate, 2,2,3,3-tetrafluoropropyl methacrylate, 2-hydroxypropyl methacrylate, 2,2,2-trifluoroethyl methacrylate, 2-hydroxyethyl methacrylate, isopropyl methacrylate, isobornyl acrylate, methyl (meth)acrylate, butyl cyanoacrylate, isobornyl methacrylate, phenyl methacrylate, 2-cyanobutyl acrylate, tert-butyl methacrylate, cyclohexyl acrylate, cyclohexyl methacrylate, 4-tert-butylcyclohexyl acrylate, 4-tert-butylcyclohexyl methacrylate, ethyl cyanoacrylate, methyl cyanoacrylate, 3,3,5-trimethylcyclohexyl acrylate, 3,3,5-trimethylcyclohexyl methacrylate, a substituted or unsubstituted $(C_6$-$C_{12})$cycloalkyl (meth)acrylate, adamantyl (meth)acrylate, or combinations thereof.

The weight fraction of the polymerized high-$T_g$ monomers in the acrylic copolymer will vary depending on desired properties of the acrylic copolymer, such as $T_g$, molecular weight, and gel content after curing.

As described herein, m of formula (I) is a weight fraction of the polymerized high-$T_g$ monomer. In some embodiments, m is from 0 to 0.999, provided the sum of m and n is at least 0.4. In further embodiments, m is greater than or equal to 0.01, such as greater than or equal to 0.05, greater than or equal to 0.1, greater than or equal to 0.15, greater than or equal to 0.2, greater than or equal to 0.25, greater than or equal to 0.30, greater than or equal to 0.35, greater than or equal to 0.40, greater than or equal to 0.45, greater than or equal to 0.50, greater than or equal to 0.55, or greater than or equal to 0.60. In embodiments, m is from 0.10 to 0.95, from 0.10 to 0.95, from 0.10 to 0.90, from 0.10 to 0.85, from 0.10 to 0.80, from 0.10 to 0.75, from 0.10 to 0.70, from 0.10 to 0.60, from 0.10 to 0.50, from 0.10 to 0.40, from 0.10 to 0.30, from 0.10 to 0.20, from 0.20 to 0.95, from 0.20 to 0.90, from 0.20 to 0.85, from 0.20 to 0.80, from 0.20 to 0.70, from 0.20 to 0.60, from 0.20 to 0.50, from 0.20 to 0.40, from 0.20 to 0.30, from 0.30 to 0.95, from 0.30 to 0.90, from 0.30 to 0.85, from 0.30 to 0.80, from 0.30 to 0.70, from 0.30 to 0.60, from 0.30 to 0.50, from 0.30 to 0.40, from 0.40 to 0.95, from 0.40 to 0.90, from 0.40 to 0.85, from 0.40 to 0.80, from 0.40 to 0.70, from 0.40 to 0.60, from 0.40 to 0.50, from 0.50 to 0.95, from 0.50 to 0.90, from 0.50 to 0.85, from 0.50 to 0.95, from 0.50 to 0.90, from 0.50 to 0.85, from 0.50 to 0.80, from 0.50 to 0.70, from 0.50 to 0.60, from 0.60 to 0.95, from 0.60 to 0.90, from 0.60 to 0.85, from 0.60 to 0.80, from 0.60 to 0.70, from 0.70 to 0.95, from 0.70 to 0.90, from 0.70 to 0.85, or from 0.70 to 0.80.

In embodiments, the oligomer includes polymerized low-$T_g$ monomer units, optionally in combination with

polymerized high-$T_g$ monomer units. The polymerized low-$T_g$ monomer units may be identical or a combination of multiple types of discrete monomer units such as two types of discrete monomer units, three types of discrete monomer units, four types of discrete monomer units, or more than four types of discrete monomer units. In embodiments, the low-$T_g$ monomer units can have a glass transition temperature ($T_g$) less than 25 °C or a Fox Equation average $T_g$ less than 25 °C. As defined herein, any reference herein to the $T_g$ of a monomer refers to the $T_g$ of a homopolymer formed from that monomer. In embodiments where the oligomer comprises two or more distinct low-$T_g$ monomer units, the $T_g$ refers to the Fox Equation average $T_g$ of the low-$T_g$ monomer units, as defined previously herein. In embodiments, the low-$T_g$ monomer units have a Fox Equation average $T_g$ of less than 25 °C, such as less than 20 °C, less than 15 °C, less than 10 °C, less than 5 °C, less than 0 °C, less than -5 °C, less than -10 °C, less than -15 °C, less than -20 °C, or less than -30 °C. In embodiments, the low-$T_g$ monomer units have a Fox Equation average $T_g$ of from -150 °C to 24 °C, such as preferably -80 °C to 0 °C, and most preferably from -60 °C to -10 °C.

In embodiments, $A^2$ of formula (I) is $(C_4$-$C_{30})$hydrocarbyl or $(C_4$-$C_{30})$heterohydrocarbyl. In embodiments, $A^2$ is linear or branched $(C_4$-$C_{30})$alkyl, or combinations thereof. In embodiments, $A^2$ is chosen from n-butyl, isobutyl, hexyl, 2-ethylhexyl, isooctyl, isodecyl, tridecyl, lauryl, or combinations thereof.

In embodiments, $Z^2$ of formula (I) is -H or $-CH_3$.

In embodiments, the low-$T_g$ monomers are monovalent. In embodiments, the low-$T_g$ monomers can include (meth)acrylate ester monomers, including acrylate ester monomers and methacrylate ester monomers. Examples of acrylate ester monomers include sec-butyl acrylate monomers and tert-butyl acrylate monomers. Examples of methacrylate ester monomers include butyl methacrylate monomers and pentyl methacrylate monomers.

Further examples of low $T_g$ monomer units of the oligomer include, but are not limited to, monomer units chosen from n-butyl (meth)acrylate, isobutyl (meth)acrylate, hexyl (meth)acrylate, 2-ethylhexyl (meth)acrylate, isooctyl (meth)acrylate, isodecyl (meth)acrylate, tridecyl (meth)acrylate, lauryl (meth)acrylate, nonyl acrylate, decyl (meth)acrylate, hexyl (meth)acrylate, dodecyl (meth)acrylate, butyl acrylate, 2-ethylhexyl acrylate, octyl (meth)acrylate, propyl acrylate, 4-cyanobutyl acrylate, isobutyl acrylate, 2,2,3,3-tetrafluoropropyl acrylate, ethyl acrylate, sec-butyl acrylate, dodecyl acrylate, tetrahydro furfuryl acrylate, tetradecyl (meth)acrylate, isopropyl acrylate, pentyl (meth)acrylate, 2-cyanoethyl acrylate, benzyl acrylate, phenoxyethyl acrylate, cyclohexyl acrylate, hexadecyl (meth)acrylate, 1-(dimethylamino)ethyl (meth)acrylate, 1-(diethylamino)ethyl (meth)acrylate, cyanomethyl acrylate, 2-methyl butyl acrylate, 2-octyl acrylate, or combinations thereof.

The weight fraction of the polymerized low-$T_g$ monomers in the acrylic copolymer will vary depending on desired properties of the acrylic copolymer, such as $T_g$, molecular weight, and gel content after curing.

As described herein, n of formula (I) is a weight fraction of the polymerized low-$T_g$ monomer. In some embodiments, n is from 0 to 0.999, provided the sum of m and n is at least 0.4. In embodiments, n is greater than or equal to 0.001, such as greater than or equal to 0.02, greater than or equal to 0.05, greater than or equal to 0.10, greater than or equal to 0.15, greater than or equal to 0.20, greater than or equal to 0.25, greater than or equal to 0.30, greater than or equal to 0.35, greater than or equal to 0.40, greater than or equal to 0.45, greater than or equal to 0.50, greater than or equal to 0.55, greater than or equal to 0.60, greater than or equal to 0.65, greater than or equal to 0.70, greater than or equal to 0.75, or greater than or equal to 0.80. In embodiments, n is from 0.001 to 0.989, from 0.001 to 0.90, from 0. 001 to 0.80, from 0. 001 to 0.70, from 0. 001 to 0.60, from 0. 001 to 0.50, from 0.001 to 0.40, from 0.001 to 0.30, from 0.001 to 0.20, from 0.001 to 0.10, from 0.001 to 0.05, from 0.01 to 0.989, from 0.01 to 0.90, from 0.01 to 0.80, from 0. 01 to 0.70, from 0. 01 to 0.60, from 0. 01 to 0.50, from 0.01 to 0.40, from 0.01 to 0.30, from 0.01 to 0.20, from 0.01 to 0.10, from 0.01 to 0.05, from 0.05 to 0.989, from 0.05 to 0.90, from 0.05 to 0.80, from 0.05 to 0.70, from 0.05 to 0.60, from 0.05 to 0.50, from 0.05 to 0.40, from 0.05 to 0.30, from 0.05 to 0.20, from 0.05 to 0.10, from 0.10 to 0.989, from 0.10 to 0.90, from 0.10 to 0.80, from 0.10 to 0.70, from 0.10 to 0.60, from 0.10 to 0.50, from 0.10 to 0.40, from 0.10 to 0.30, from 0.10 to 0.20, from 0.20 to 0.989, from 0.20 to 0.90, from 0.20 to 0.80, from 0.20 to 0.70, from 0.20 to 0.60, from 0.20 to 0.50, from 0.20 to 0.40, from 0.20 to 0.30, from 0.30 to 0.989, from 0.30 to 0.90, from 0.30 to 0.80, from 0.30 to 0.70, from 0.30 to 0.60, from 0.30 to 0.50, from 0.30 to 0.40, from 0.40 to 0.989, from 0.40 to 0.90, from 0.40 to 0.80, from 0.40 to 0.70, from 0.40 to 0.60, from 0.40 to 0.50, from 0.50 to 0.989, from 0.50 to 0.90, from 0.50 to 0.80, from 0.50 to 0.70, from 0.50 to 0.60, from 0.60 to 0.989, from 0.60 to 0.90, from 0.60 to 0.80, from 0.60 to 0.70, from 0.70 to 0.989, from 0.70 to 0.90, from 0.70 to 0.80, from 0.80 to 0.989, from 0.80 to 0.90, or from 0.90 to 0.989.

When the acrylic copolymer includes both low $T_g$ monomers and high $T_g$ monomers, the weight ratio of low $T_g$ monomers to high $T_g$ monomers may be adjusted depending on desired properties of the acrylic copolymer, such as $T_g$ and gel content after curing. In embodiments, the weight ratio of low $T_g$ monomers to high $T_g$ monomer units in the acrylic copolymer may be from 10:1 to 1:9, from 5:1 to 1:9, from 2:1 to 1:9, from 1:1 to 1:9, from 10:1 to 1:5, from 5:1 to 1:5, from 2:1 to 1:5, from 1:1 to 1:5, from 10:1 to 1:5, or any and all subranges formed from any of these endpoints.

In addition to at least one polymerized high-$T_g$ monomer unit, or at least one polymerized low-$T_g$ monomer unit, or preferably a combination of at least one polymerized high-$T_g$ monomer unit and at least one polymerized low-$T_g$ monomer unit, the oligomers further include at least one polymerized chromophore monomer unit. The polymerized chromophore monomer units may act as a photoinitiator and induce curing of the oligomer upon radiation. A photoinitiator

is generally a moiety that, on absorption of light, generates reactive species (ions or radicals) and initiates one or several chemical reactions or transformations.

In embodiments, $A^3$ of formula (I) is X or -L-X, where L is a $(C_1-C_{10})$heterohydrocarbylene linker and X is a monovalent residue of the Norrish Type II chromophore. As used in this disclosure, "residue" refers to an atom or a group of atoms that forms part of a molecule, such as a portion of a Norrish Type II chromophore. In other embodiments, $A^3$ is a monovalent residue of the Norrish Type II chromophore. In embodiments, X may be a monovalent residue of any one of the above-discussed Norrish Type II chromophores. In embodiments, $A^3$ is a monovalent residue of a thioxanthone, an anthraquinone, or a camphorquinone. In embodiments, $A^3$ is a monovalent residue comprising a thioxanthone.

In particular, $A^3$ of formula (I) may have the following formula (II) or (III):

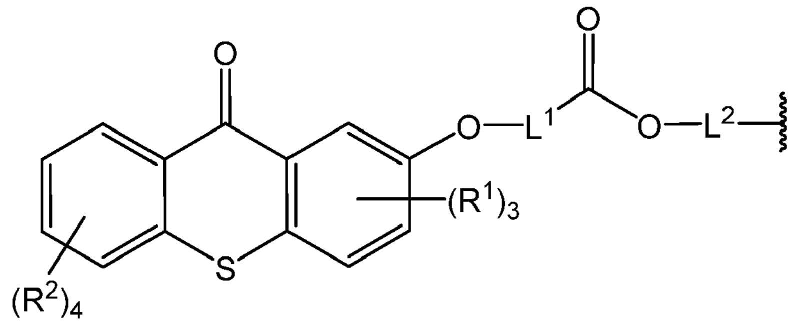

(II)

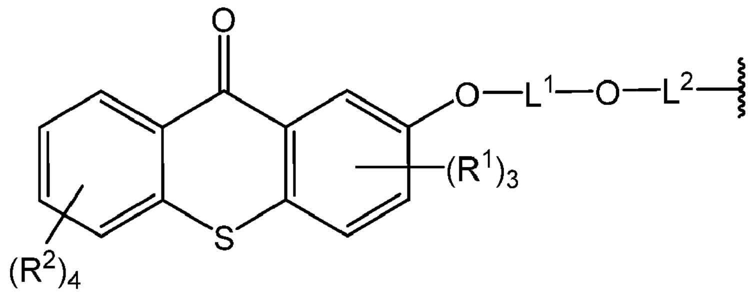

(III)

wherein, in formula (II) and formula (III):

$L^1$ is an alkylene;

$L^2$ is a divalent linker comprising at least 2 carbon atoms;

each $R^1$ and $R^2$ are independently selected from -H, halogen, alkyl, cycloalkyl, heterocycloalkyl, alkoxy, aryloxy, thioalkyl, thioaryl, alkenyl, alkynyl, aryl, aralkyl, alkaryl, heteroaryl, $-C(=O)R^a$, $-NR^bR^c$, alkylamino, alkylthiol, haloalkyl, $-NO_2$, -CN, $-C(=O)OR^d$, $-C(=O)NR^bR^c$;

$R^a$ is selected from an optionally substituted alkyl, an optionally substituted cycloalkyl, an optionally substituted heterocycloalkyl and an optionally substituted aryl;

$R^b$, $R^c$ and $R^d$ are independently selected from -H, alkyl and aryl;

In particular, in formula (II) and formula (III), $R^1$ and $R^2$ are independently -H, halogen, alkyl or alkoxy. More particularly, $R^1$ and $R^2$ are independently H or alkyl. Even more particularly $R^1$ and $R^2$ are independently H or methyl. More particularly still, $R^1$ and $R^2$ are all -H.

In formula (II) and formula (III), $L^1$ is an alkylene. In particular, each $L^1$ may independently be a linear or branched alkylene having from 1 to 6, from 1 to 4 or from 1 to 2 carbon atoms. More particularly, $L^1$ is $-CH_2-$ or $-CH(CH_3)-$. Even more particularly, $L^1$ is $-CH_2-$.

In formula (II) and formula (III), $L^2$ is a divalent linker comprising at least 2 carbon atoms. $L^2$ may be an aromatic, aliphatic or cycloaliphatic hydrocarbon linker, a polyether linker, a polyester linker, a polycarbonate linker, a polycaprolactone linker, a polyurethane linker, a polyorganosiloxane linker, a polybutadiene linker, and combinations thereof. In

particular, $L^2$ may be selected from an aromatic, aliphatic or cycloaliphatic hydrocarbon linker, a polyether linker, a polyester linker and combinations thereof.

In formula (II) and formula (III), $L^2$ may be $-CH_2-CH(OH)-CH_2-$ or the residue of a diol. As used herein, the term "residue of a diol" means the linker obtained by removing two OH groups from a diol. Examples of suitable diols include 1,3-propylene glycol, 1,3- or 1,4-butylene glycol, 1,5-pentanediol, 1,6-hexanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, cyclohexanediol, cyclohexane-1,4-dimethanol, norbornene dimethanol, norbornane dimethanol, tricyclodecanediol, tricyclodecane dimethanol, bisphenol A, B, F or S, hydrogenated bisphenol A, B, F or S, di-, tri- or tetraethylene glycol, di-, tri- or tetrapropylene glycol, di-, tri- or tetrabutylene glycol, a polyethylene glycol, a polypropylene glycol, a polytetramethylene glycol, a poly(ethylene glycol-co-propylene glycol), a dianhydrohexitol (i.e. isosorbide, isomannide, isoidide), a polybutadiene polyol, a polyester polyol, a polyether polyol, a polyorganosiloxane polyol, a polycarbonate polyol as well as the alkoxylated (e.g., ethoxylated and/or propoxylated) derivatives thereof and the derivatives obtained by ring-opening polymerization of ε-caprolactone initiated with one of the aforementioned polyols.

In formula (II) and formula (III), $L^2$ may be $-CH_2-CH(OH)-CH_2-$ or a divalent linker selected from one of formulas (A)-(E):

$$-(CR^{22}R'^{22})_a- \quad (A)$$

$$-[(CR^{23}R'^{23})_b-O]_c-(CR^{23}R'^{23})_b- \quad (B)$$

$$-[(^{24}R'^{24})_d-O]_e-(CR^{25}R'^{25})_f-[O-(CR^{26}R'^{26})_{d'}]_{e'}- \quad (C)$$

$$-[(CR^{27}R'^{27})_g-C(=O)O]_h-(CR^{28}R'^{28})_i- \text{ or}$$

$$-(CR^{28}R'^{28})_i-[(CR^{27}R'^{27})_g-C(=O)O]h- \quad (D)$$

$$-[(CR^{29}R'^{29})_j-O-C(=O)-(CR^{30}R'^{30})_k-C(=O)-O]_l-(CR^{29}R'^{29})_j- \quad (E)$$

wherein

$R^{22}$, $R'^{22}$, $R^{25}$, $R'^{25}$, $R^{29}$, $R'^{29}$, $R^{30}$ and $R'^{30}$ are independently H or alkyl;

$R^{23}$, $R'^{23}$, $R^{24}$, $R'^{24}$, $R^{26}$, $R'^{26}$, $R^{27}$, $R'^{27}$, $R^{28}$ and $R'^{28}$ are independently H or methyl;

a is 2 to 20;

b, d, and d' are independently 2 to 4;

c is 1 to 20;

e and e' are independently 0 to 20 with the proviso that at least one of q and q' is not 0 ;

f is 2 to 20;

g is 3 to 12;

h is 1 to 20;

i is 2 to 8;

j is 2 to 20;

k is 2 to 30;

1 is 1 to 20.

In particular, in formula (II) and formula (III), $L^2$ may be $-CH_2-CH(OH)-CH_2-$ or a divalent linker selected from

an alkylene such as 1,3-propanediyl, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated (in particular an ethoxylated and/or propoxylated) derivative of the aforementioned alkylenes; an esterified (in particular by ring-opening polymerization of a lactone such as ε-caprolactone) derivative of the aforementioned alkylenes; a residue of a di-, tri-, tetra- or polyoxyalkene without the OH groups such as di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol).

In a preferred embodiment, $A^3$ of formula (I) is according to one of the following formulas (IIa) or (IIb):

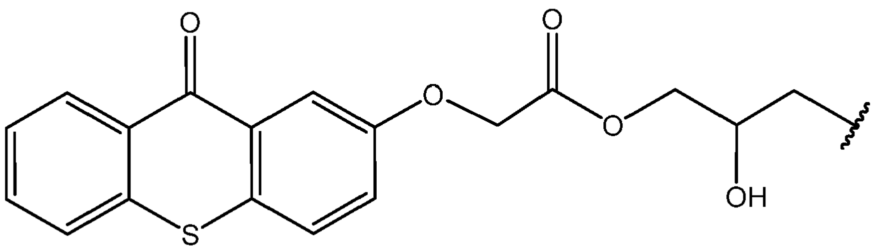

(IIa)

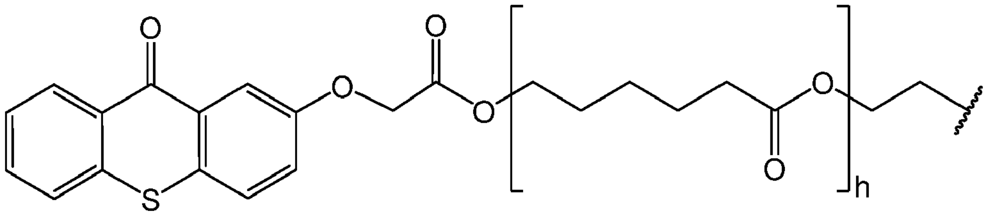

(IIb)

wherein h is 1 to 20.

Other suitable linker groups may be used, including others not having a carbonyl group.

The weight fraction of the polymerized chromophore monomer units in the acrylic copolymer may be varied based on factors that are known in the art, such as desired cure time among other factors. As described herein, p of formula (I) is a weight fraction of the polymerized chromophore monomer. In embodiments, p is greater than or equal to 0.001, such as greater than or equal to 0.005, or greater than or equal to 0.01. In embodiments, p is from 0.001 to 0.40, from 0.001 to 0.30, from 0.001 to 0.20, from 0.001 to 0.10, from 0.001 to 0.05, from 0.001 to 0.03, from 0.005 to 0.40, from 0.005 to 0.30, from 0.005 to 0.20, from 0.005 to 0.10, from 0.005 to 0.05, from 0.005 to 0.03, or from 0.005 to 0.02.

It should be understood that, when the acrylic copolymer includes more than one discrete type of polymerized chromophore monomer, the weight fraction p of the polymerized chromophore monomers in the acrylic copolymer equals the sum of the individual weight fractions of every discrete type of polymerized chromophore monomer. Furthermore, it should be understood that, even if a chromophore monomer may be characterized based on $T_g$ alone as a high $T_g$ monomer or a low $T_g$ monomer, any monomer including a pendant chromophore is considered to be neither a high $T_g$ monomer nor a low $T_g$ monomer with respect to calculating the weight fractions m and n in formula (I).

The acrylic copolymers disclosed herein optionally include polymerized additional monomer units. The additional monomer units can include monomer units that are copolymerized with the high-$T_g$ monomer units, the low-$T_g$ monomer units, and the chromophore monomer units. In embodiments, additional monomer units can include acrylic monomer units, such as vinyl amides, vinyl ethers, vinyl esters. In embodiments, the additional monomer units can include other monomer units that are polymerized in the oligomer such as styrene derivatives and maleimides.

In embodiments, the additional monomer units can comprise epoxy, ether, ester, acid, or ketone functionality that are not polymerized in the oligomer. For example, the additional monomer units may comprise a caprolactone-extended acrylate (SR49B, Sartomer), cyclic trimethylolpropane formal acrylate (SR531, Sartomer) propoxylated tetrahydrofurfuryl acrylate (SR611, Sartomer), beta-carboxyethylacrylate, glycidyl methacrylate, or 2-(2-ethoxyethoxy)ethyl acrylate (SR256).

In embodiments, the additional monomer units can be a monomer that acts synergistically with the polymerized chromophore monomer units and/or reduce oxygen inhibition. Oxygen inhibition may limit surface curing and hence limit the performances of a resulting cured product.

Common synergist functionality that functions as a synergist for a Type II photoinitiator may include tertiary amine functionality, alkylenoxy functionality, mercaptan groups, or other sources of readily abstractable hydrogen. Typical additional monomer units which contain synergist functionality are exemplified by monomers such as dimethylaminoethylacrylate (DMAEMA), dimethylaminoethylmethacrylate (DMAEA), N-vinylpyrrolidone (NVP), N-vinylcaprolactam (VCAP),

acryloxymorpholine (ACMO), dimethyl acrylamide (DMAC), and poly(ethylenoxide)monoacrylate.

In embodiments, the additional monomer units can comprise an amine synergist. Some examples of amine synergists include tertiary amines. When an amine-synergist containing monomer is included in the oligomer in conjunction with the Norrish Type II chromophore of the polymerized chromophore monomer unit, the tertiary amine provides an active hydrogen donor site for the excited triplet state of the chromophore, thus producing a reactive alkyl-amino radical that subsequently can initiate polymerization. Tertiary amines are also able to convert unreactive peroxy species, formed by reaction between oxygen and free radicals, to reactive alkyl-amino radicals, thus reducing the effects of oxygen on curing.Examples of amine synergists that may be a component of the polymerized additional monomer include low-molecular weight tertiary amines (i.e. tertiary amines having a molecular weight of less than 200 g/mol) such as triethanol amine, N-methyldiethanol amine. Other types of amine synergists are aminobenzoates, polymerizable aminobenzoates, polymeric aminobenzoates and mixtures thereof. Examples of aminobenzoates include ethyl 4-(dimethylamino)benzoate (EDB), pentyl 4-(dimethylamino)benzoate, 2-ethylhexyl 4-(dimethylamino)benzoate and 2-butoxyethyl 4-(dimethylamino)benzoate (BEDB).

In embodiments, the additional monomer units are (meth)acrylate monomers having a pendent amine functionality.

Any of the above-discussed synergists or amine-based synergists may be the pendent residue in the additional monomer units of the acrylic copolymers herein.

In embodiments, $A^4$ of formula (II) is a $(C_0\text{-}C_{30})$hydrocarbyl or a $(C_1\text{-}C_{30})$heterohydrocarbyl. $A^4$ may be a monovalent residue of any one of the above-discussed synergists. In embodiments, $A^4$ is selected from dimethylaminomethyl, dimethylaminoethyl, morpholino, dimethylamino, or combinations thereof.

In embodiments, $Z^4$ of formula (I) is -H or $-CH_3$.

The weight fraction of the polymerized additional monomers in the oligomer can vary depending on factors well-known in the art, such as desired cure time and desired extent of cure. As described herein, q of formula (I) is a weight fraction of the additional monomer. In embodiments, q is 0. In other embodiments, q is greater than or equal to 0.001, such as greater than or equal to 0.005, or greater than or equal to 0.01. In embodiments, q is from 0.001 to 0.20, from 0.001 to 0.10, from 0.001 to 0.05, from 0.001 to 0.03, from 0.005 to 0.20, from 0.005 to 0.10, from 0.005 to 0.05, from 0.005 to 0.03, or from 0.005 to 0.02.

Acrylic copolymers described herein can be formed by controlled polymerization of the high-$T_g$ monomer units, the low-$T_g$ monomer units, the chromophore monomer units, and optionally, the additional monomers. Common methods known in the art, such as but not limited to solution acrylic polymerization can be used to form the acrylic copolymers.

In embodiments, the acrylic copolymer may have a weight average molecular weight of at least 10,000 grams per mole (g/mol). In embodiments, the acrylic copolymer may have a weight average molecular weight from 10,000 g/mol to 600,000 g/mol. In embodiments, the acrylic copolymer may have a weight average molecular weight equal to or greater than 10,000 g/mol, equal to or greater than 25,000 g/mol, or even equal to or greater than 50,000 g/mol. In embodiments, the acrylic copolymer may have a weight average molecular weight equal to or less than 600,000 g/mol, equal to or less than 500,000 g/mol, equal to or less than 400,000 g/mol, equal to or less than 300,000 g/mol, equal to or less than 200,000 g/mol, or even equal to or less than 100,000 g/mol. In embodiments, the acrylic copolymer may have a weight average molecular weight from 10,000 g/mol to 600,000 g/mol, from 10,000 g/mol to 500,000 g/mol, from 10,000 g/mol to 400,000 g/mol, from 10,000 g/mol to 300,000 g/mol, from 10,000 g/mol to 200,000 g/mol, from 10,000 g/mol to 100,000 g/mol, from 25,000 g/mol to 600,000 g/mol, from 25,000 g/mol to 500,000 g/mol, from 25,000 g/mol to 400,000 g/mol, from 25,000 g/mol to 300,000 g/mol, from 25,000 g/mol to 200,000 g/mol, from 25,000 g/mol to 100,000 g/mol, from 50,000 g/mol to 600,000 g/mol, from 50,000 g/mol to 500,000 g/mol, from 50,000 g/mol to 400,000 g/mol, from 50,000 g/mol to 300,000 g/mol, from 50,000 g/mol to 200,000 g/mol, or even from 50,000 g/mol to 100,000 g/mol, or any and all subranges formed from any of these endpoints.

In embodiments, the acrylic copolymer may have a glass transition temperature $T_g$ equal to or less than -10 °C to ensure the curable composition is suitable for certain applications, such as use as a pressure sensitive adhesive. In embodiments, the acrylic copolymer may have a $T_g$ equal to or less than -10 °C, such as equal to or less than -15 °C, equal to or less than -20 °C, equal to or less than -25 °C, or even equal to or less than -30 °C. In embodiments, the acrylic copolymer may have a $T_g$ equal to or greater than -120 °C, equal to or greater than -100 °C, equal to or greater than -80 °C, or even equal to or greater than -60 °C. In embodiments, the acrylic copolymer may have a $T_g$ from -10 °C to -120 °C, from -10 °C to -100 °C, from -10 °C to -80 °C, from -10 °C to -60 °C, from -15 °C to -120 °C, from -15 °C to -100 °C, from -15 °C to -80 °C, from -15 °C to -60 °C, from -20 °C to -120 °C, from -20 °C to -100 °C, from -20 °C to -80 °C, from -20 °C to -60 °C, from -25 °C to -120 °C, from -25 °C to -100 °C, from -25 °C to -80 °C, from -25 °C to -60 °C, from -30 °C to -120 °C, from -30 °C to -100 °C, from -30 °C to -80 °C, or even from -30 °C to -60 °C, or any and all subranges formed from any of these endpoints.

In embodiments, the acrylic copolymer has formula (IV):

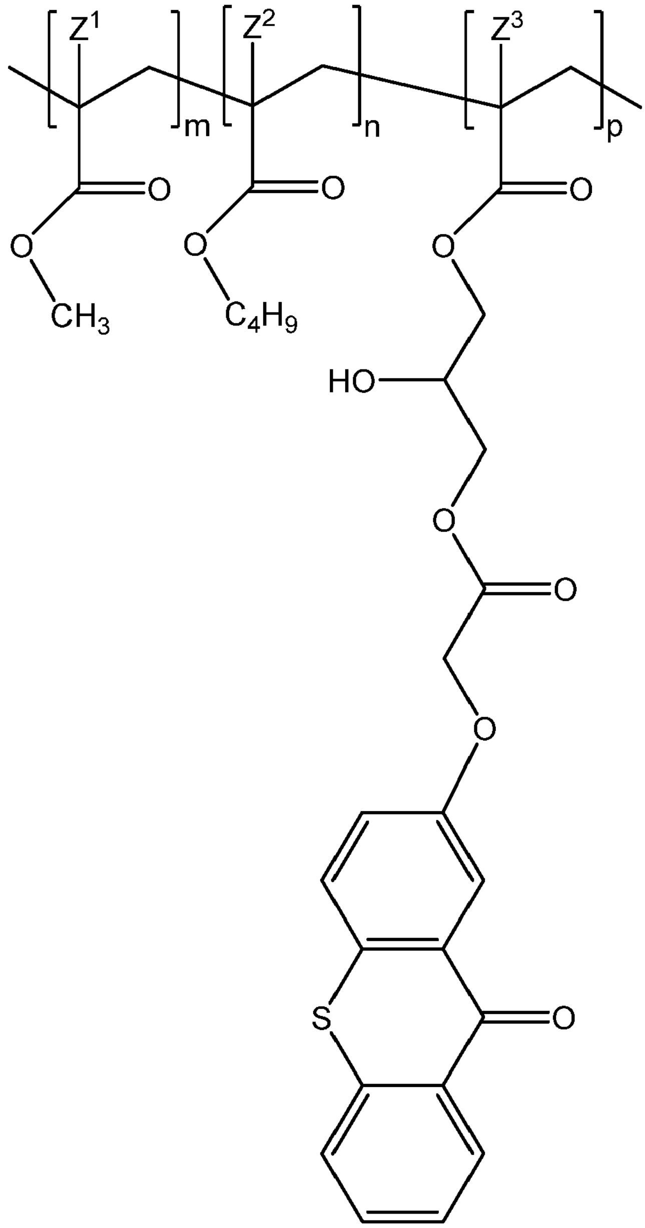

(IV)

where m is from 0.2 to 0.8, n is from 0.1 to 0.8, p is from 0.001 to 0.2, and q is from 0 to 0.2.

In embodiments where q is greater than 0, $Z^1$, $Z^2$, $Z^3$, and $Z^4$ of formula (III) are independently -H or $-CH_3$. For instance, in embodiments where q is greater than 0, $Z^1$ is $-CH_3$ and $Z^2$, $Z^3$, and $Z^4$ are -H. In embodiments where q is equal to 0, $Z^1$, $Z^2$, and $Z^3$ of formula (III) are independently -H or $-CH_3$. For instance, in embodiments where q is greater than 0, $Z^1$ is $-CH_3$ and $Z^2$ and $Z^3$ are -H.

The acrylic copolymers described herein may be cured in combination with at least one (meth)acrylate monomer, or at least one (meth)acrylate oligomer, or both, to obtain a cured composition. In embodiments, a cured composition that is a product of photocuring a composition comprising an acrylic copolymer according to embodiments described herein and at least one (meth)acrylate monomer exhibits: an APHA-10 mm initial color from 0.1 to 50; an initial yellowness (b*) from 0.01 to 2; and a $T_g$ of equal to or greater than 0 °C.

In some embodiments, the cured composition exhibits an APHA-10 mm initial color from 0.1 to 50, from 0.1 to 45, from 0.1 to 40, from 0.5 to 45, from 1.0 to 45, from 2.0 to 40, from 3.0 to 40, from 4.0 to 40, from 5.0 to 40, from 7.0 to 40, or from 10.0 to 40. In other embodiments, the cured composition exhibits an APHA-10 mm initial color from 0.1 to 10, from 0.3 to 9, from 0.5 to 9, from 1 to 9, from 2 to 9, from 2.5 to 9, from 2.5 to 8, from 2.5 to 7.5, or from 3 to 7.

In some embodiments, the cured composition exhibits an initial yellowness (b*) from 0.01 to 2, from 0.05 to 2, from 0.1 to 2, from 0.1 to 1.7, from 0.1 to 1.5, from 0.2 to 1.5, from 0.3 to 1.5, from 0.4 to 1.5, from 0.4 to 1.4, from 0.4 to 1.3, or from 0.5 to 1.2. In other embodiments, the cured composition exhibits an initial yellowness (b*) from 0.01 to

1.0, from 0.05 to 1.0, from 0.1 to 1.0, from 0.1 to 0.7, from 0.1 to 0.6, from 0.15 to 0.55, or from 0.2 to 0.5.

In embodiments, the cured composition may have a $T_g$ of equal to or greater than 0 °C, such as equal to or greater than 5 °C, equal to or greater than 10 °C, equal to or greater than 15 °C, equal to or greater than 20 °C, equal to or greater than 25 °C, equal to or greater than 30 °C, equal to or greater than 35 °C, equal to or greater than 40 °C, equal to or greater than 45 °C, or equal to or greater than 50 °C. In embodiments, the cured composition may have a $T_g$ of from 0 °C to 100 °C.

In some embodiments, the cured composition does not comprise a tertiary amine synergist.

In embodiments, the cured composition does not comprise a small molecule photoinitiator.

In embodiments, the composition is photocured by illumination of the composition with a Phoseon LED 395 nm bulb. In other embodiments, the composition is photocured by illumination of the composition with an LC6 Fusion, H-bulb.

In some embodiments, the at least one (meth)acrylate oligomer is included and is chosen from at least one of urethane acrylate and urethane methacrylate, and the at least one (meth)acrylate monomer is included and is chosen from at least one of 2-hydroxyethyl methacrylate and isobornyl methacrylate.

The acrylic copolymers described herein may be incorporated into methods for coating a substrate. In embodiments, a method of coating a substrate includes applying a composition to a substrate to form an uncured coating of the composition on the substrate, the composition comprising: an acrylic copolymer according to embodiments described herein; and at least one (meth)acrylate monomer; and exposing the uncured coating to UV radiation to cure the composition and obtain a cured coating on the substrate. Example substrates that may be coated include, without limitation, glass, polycarbonate, PET, polyethylene, polypropylene, metals, human and synthetic fingernails, paper and products including cardboard and paperboard, and ceramics.

Acrylic copolymers according to embodiments described herein may be used in graphic arts, inks, and industrial coatings applications for which a yellowing of the acrylic copolymer, a cured composition prepared from the acrylic copolymer, or a coating including the acrylic copolymer and applied to a substrate, may be unfavorable.

## EXAMPLES

The following examples are illustrative in nature, and should not be understood to limit the subject matter of the present disclosure. Using embodiments described above, an exemplary reactive acrylic copolymer was prepared and used according to the following examples.

### Materials

2-Carboxymethylthioxanthone (CMTX), 4-acryloyloxy benzophenone, methyl ethyl ketone (MEK), butyl acrylate (BA), t-butyl acrylate, glycidyl methacrylate (GMA), methyl methacrylate (MMA), acetic acid, and hydroxyethyl ethylene urea methacrylate were all were purchased from Sigma Aldrich Chemical Company. Urethane methacrylate (UMA, CN1968®), urethane acrylate (UA, CN963®), hydroxyethyl methacrylate (HEMA, SR170®) and isobornyl methacrylate (IBOMA, SR423A®), ditrimethylolpropane tetraacrylate (DMPTA, SR355®), 2-isothioxanthone (ITX, Speedcure ITX®), and 2-ethylhexyl 4-(dimethylamino)benzoate (EHDMA, Speedcure EHA®) are common UV-curable monomers and photoinitiators that were developed at Sartomer.

### Preparation of Curable Compositions

All curable compositions were prepared by adding the components to a Flacktek® polypropylene cup and mixing until homogenous at 1500 - 2000 rpm for 2 minutes using a Flacktek® DAC 400.2 VAC high speed mixer.

### Testing Procedures

To determine gel content, the following procedure was employed. Sample was pipetted onto a clean glass slide and a 3 MIL coating was created using a ByK draw-down square. The drawdown thickness used depended on the final methyl ethyl ketone (MEK) percentage in the reactive acrylic copolymer. For instance, Reactive Acrylic Copolymer 1 (RAC 1) was drawn down with a four MIL thickness to result in a three MIL coating of RAC 1 after evaporation of the MEK. After the draw-down, the glass slides were placed in a 60 °C oven for 1 hour to remove the solvent. To cure, the glass slides underwent 3 passes under a LC6 Fusion H bulb curing unit at 15 feet per minute. For the gel contents that were conducted in nitrogen, the glass slides were placed in a nitrogen chamber and flooded with nitrogen for 10 minutes, then the chamber was passed under the H bulb for curing. After curing, the cross-linked reactive acrylic copolymer film was removed from the glass slide. Its initial weight was recorded, and then the removed sample was submerged in MEK for 24 hours. To determine the final weight of the cross-linked reactive acrylic copolymer, the sample was vacuum filtered

from the MEK and placed in a 60 °C oven to evaporate excess MEK.

For the photo differential scanning calorimetry experiments, the following procedure was employed. To prepare the sample, an initial weight ratio of RAC 1 to ditrimethylolpropane tetraacrylate (DMPTA, SR355®) monomer was added to a Flacktek mixing cup and mixed at 2000 RPM for 2 minutes using a Flacktek® DAC 400.2 VAC high-speed mixer. A small amount of sample (5-10 mg) was placed into an aluminum Tzero pan, which was then placed in the oven at 60 °C for 1-2 hours to drive off any residual solvent. The initial ratio of RAC 1:ditrimethylolpropane tetraacrylate was selected to achieve a 1:1 weight ratio of RAC 1:ditrimethylolpropane tetraacrylate after the solvent was flashed off. The sample was placed in a TA instruments Q2000 DSC equipped with an EFOS A4000 Acticure UV/Visible light curing system containing a 100W Mercury lamp light source, along with a reference pan. The UV-light intensity was measured out of the sample window using an EIT UV power puck II radiometer prior to the experiment. During the experiment, the temperature is stabilized at 25 °C. After one minute of equilibrium, UV light (broad spectrum) is turned on and the heat flow generated from the sample was recorded for two minutes. The lamp was turned off and the experiment was allowed to run for an additional minute to bring heat flow down to baseline. The total duration of the experiment was four minutes.

For the UV Curable Coatings Composition, the following procedure was employed. To prepare UV/LED curable coatings composition, a sample was pipetted onto a clean glass slide (4 inch X 4 inch). A ByK 3 Mil draw down bar was used to draw down the sample onto the glass. The coating was placed in a 60 °C oven for 1 hour to remove the MEK. All coatings were ~3 MIL wet thickness once MEK was evaporated. After drying, the coating was passed under either (1) a LC6 Fusion H bulb curing unit three times at 15 feet per minute or (2) a Phoseon LED 395 nm bulb, 3 passes, 30 fpm to crosslink the coatings composition. Once cured, initial color, haze and yellowness were measured on a Hunter Lab ColorQuest XE spectrometer. Specifically, color, haze, and yellowness are typically measured on a liquid resin using a Hunter Lab Colorimeter and is measured via ASTM D1209 APHA/Pt-Co color scale in accordance with the instrumental ASTM D5386 method. This method was modified to measure color, haze, and yellowness on a coating through glass using a modified method. Hunter Lab ColorQuest XE spectrometer. Other performance properties such as surface tack, Konig hardness, and adhesion were also measured. Konig hardness of the coatings formulations were measured using ASTM D4366. Surface tack was determined qualitatively by assigning a number from the arbitrary scale from 0 to 5 (0 for no tack/ 5 for very tacky). Adhesion testing was measured using the ASTM 3359 Method B.

Example 1

Preparation of PA 1

Preparation of Photoinitiator Adduct 1 (PA 1) was achieved substantially as depicted in Scheme I:

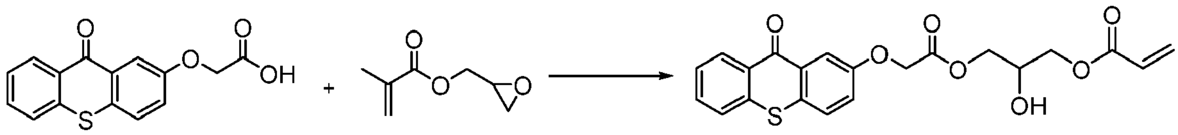

PA 1

Scheme I

Briefly, a round bottom flask equipped with stirrer, thermocouple, heating mantle, side arm and condenser was loaded with glycidyl methacrylate (GMA), inhibitor, and solvent. The apparatus was heated to 110 °C. 2-carboxymethoxythioxanthone (CMTX) was added slowly while the reaction was heating. After the addition of CMTX was complete, the mixture was sparged with air and then heated at 110 °C for 30 min to fully dissolve the CMTX. The reaction mixture was cooled to less than 50 °C, catalyst was added, and then heated to 85 °C. The reaction mixture was held at 85 °C until the reaction was complete as determined by acid value and residual GMA via GC external standard.

Example 2

Preparation of RAC 1

PA 1 was further reacted with butyl acrylate (BA) and methyl methacrylate (MMA) in methyl ethyl ketone (MEK) to form Reactive Acrylic Copolymer 1 (RAC 1). Table 1 lists the ratios of the components in RAC 1 as well as the solvent percentage remaining in the final product, the predicted $T_g$, and the molecular weight.

**Table 1. Composition of RAC 1**

| Copolymer | Backbone (wt.%) | Final MEK (%) | Predicted $T_g$ (°C) | Molecular Weight ($M_w$) |
|---|---|---|---|---|
| RAC 1 | 95 BA - 4 MMA - 1.7 CMTX-GMA | 31.2 | -46 | 28523 |

Example 3

Curing Properties of RAC 1

Further experiments revealed that RAC 1 exhibits low self-reactivity. Specifically, upon evaporation of MEK and curing RAC 1 in air and nitrogen using a Fusion H Bulb at 15 feet per minute, 3 passes, RAC 1 remained a liquid, which indicated that three passes was insufficient to photocrosslink the system and form a gel. A second attempt was made at curing RAC 1 by passing it under the Fusion H bulb a total of 10 times at 15 feet per minute in order to obtain a gel like consistency. The gel content of RAC 1 was found to be less 10% (see Tables 2 and 3, entry 1). In an attempt to increase the curing speed and facilitate crosslinking, 2-ethylhexyl 4-(dimethylamino)benzoate (EHDMA, Speedcure EHA®) was added at 3% to RAC 1. Gel content remained below 10% for RAC 1 + 3% EHDMA and the formulation still took 10 passes under the lamp to fully cure (see Tables 2 and 3, entry 2). Finally, the multifunctional monomer ditrimethylolpropane tetraacrylate (DMPTA, SR355®) was added to the formulation. With DMPTA, the formulation cured in three passes under the Fusion and had a high gel content, both with and without the addition of EHDMA (see Tables 2 and 3, entries 3 and 4).

**Table 2. Gel Content % of Compositions including RAC 1 After Curing in Air**

| Composition | Gel Content 1 | Gel Content 2 | Gel Content Average | Gel Content Standard Deviation |
|---|---|---|---|---|
| RAC 1 | 7.1 | 6.6 | 6.835 | 0.37 |
| RAC 1 + 3% EHDMA | 8.59 | 10.8 | 9.695 | 1.56 |
| 1:1 DMPTA:RAC 1 | 75.8 | 72.3 | 74.05 | 2.47 |
| 1:1 DMPTA:RAC 1+3% EHDMA | 68.4 | 66.8 | 67.6 | 1.13 |

**Table 3. Gel Content % of Compositions including RAC 1 After Curing in Nitrogen**

| Composition | Gel Content 1 | Gel Content 2 | Gel Content Average | Gel Content Standard Deviation |
|---|---|---|---|---|
| RAC 1 | 8.73 | 9.68 | 9.205 | 0.67 |
| RAC 1 + 3% EHDMA | 8.38 | 10.8 | 9.59 | 1.71 |
| 1:1 DMPTA:RAC 1 | 64.7 | 61.4 | 63.05 | 2.33 |
| 1:1 DMPTA:RAC 1 + 3% EHDMA | 67.1 | 74.9 | 71 | 5.52 |

The cure speed and enthalpy of reaction of RAC 1 + 3% EHDMA, 1:1 DMPTA:RAC 1, and 1:1 DMPTA:RAC 1 + 3% EHDMA were measured (see Table 4). RAC 1 + 3% EHDMA cured the slowest. This result is consistent with RAC 1 having a low gel content. 1:1 DMPTA:RAC 1 had a very fast cure time (0.16 min) due to the inclusion of the monomer. Adding 3% EHDMA to the 1:1 DMPTA:RAC 1 formulation further increased cure speed (0.04 min). The RAC 1 systems with DMPTA exhibited similar heat generation during cure while the RAC 1 + 3% EHDMA exhibited lower heat generation.

**Table 4. Cure Speed and Enthalpy of Reaction in Compositions Including RAC 1 in Air**

| Composition | Time to Peak Max (min) | Area Under Curve (J/g) |
|---|---|---|
| RAC 1 + 3% SC | 0.68 | 106.7 |

(continued)

| Composition | Time to Peak Max (min) | Area Under Curve (J/g) |
|---|---|---|
| 1:1 SR355:RAC 1 | 0.16 | 242.4 |
| 1:1 SR355:RAC 1+ 3% SC | 0.04 | 205.3 |

The above results reveal that RAC 1 may act as a polymeric photoinitiator in the presence of other acrylate functionalized monomers, but it exhibits little self-reactivity.

Example 4

Cured Compositions including RAC 1 and (Meth)acrylate Monomers

RAC 1 was tested in different curable compositions. Each composition included either urethane methacrylate (UMA, CN1968®) or urethane acrylate (UA, CN963®) along with both hydroxyethyl methacrylate (HEMA, SR170®) and isobornyl methacrylate (IBOMA, SR423A®) at two different weight percentages (11.2% RAC 1 or 28% RAC 1). The two different weight percentages afforded an active amount of chromophore of 0.14% or 0.37%, based on RAC 1 having 1.7% chromophore loaded on the backbone and taking into account the 30% MEK in the RAC 1 that would eventually be removed upon drying. The compositions are shown in Table 5, and are denoted Inventive 1 (I1), Inventive 2 (12), Inventive 3 (13), and Inventive 4 (14). For comparison, a small molecule photoinitiator based on 2-isothioxanthone (ITX, Speedcure ITX®) with a similar amount of MEK was used with the same monomer mixtures. The comparative compositions are shown in Table 5 and denoted as Comparative 1 (C1), Comparative 2 (C2), Comparative 3 (C3) and Comparative 4 (C4).

**Table 5. Curable Compositions Including RAC 1 or ITX as the Photoinitiator**

| | C1 | C2 | I1 | 12 | C3 | C4 | 13 | 14 |
|---|---|---|---|---|---|---|---|---|
| UMA | 16.25 | | 16.25 | | 12.5 | | 12.5 | |
| UA | | 16.25 | | 16.25 | | 12.5 | | 12.5 |
| HEMA | 2.5 | 2.5 | 2.5 | 2.5 | 2.5 | 2.5 | 2.5 | 2.5 |
| IBOMA | 2.5 | 2.5 | 2.5 | 2.5 | 2.5 | 2.5 | 2.5 | 2.5 |
| MEK | 2.75 | 2.75 | | | 6.875 | 6.875 | | |
| ITX | 0.05 | 0.05 | | | 0.125 | 0.125 | | |
| RAC 1 | | | 2.8 | 2.8 | | | 7.0 | 7.0 |
| Total | 25 | 25 | 25 | 25 | 25 | 25 | 25 | 25 |

For each of the curable compositions, two samples were taken. One sample was cured under a Fusion H-bulb and the other sample was cured under a Phoseon LED 395 nm. The performance properties of the cured compositions are shown in Table 6 (Fusion H-bulb cured) and Table 7 (Phoseon LED 395 nm cured).

Referring to the LC6 Fusion H-bulb cured compositions (Table 6), the initial color of the films after photocuring for comparative compositions C1, C2, C3, and C4 was shown to be greater than 100 (APHA, 10mm) compared to less than 50 for each of the inventive compositions I1, 12, 13, and 14. The initial yellowness (b*) values of the films after photocuring was greater than 4 for all comparative compositions, while less than 1.2 for all inventive compositions.

Referring to the Phoseon LED 395 nm cured compositions (Table 7), the initial color of the films after photocuring for comparative compositions C1, C2, C3, and C4 was shown to be greater than 55 (APHA, 10mm) compared to less than 7 for each of the inventive compositions I1, 12, 13, and 14. The initial yellowness (b*) values of the films after photocuring was greater than 4 for all comparative compositions, while less than 0.5 for all inventive compositions.

With both the LC6 Fusion H-bulb cured and the Phoseon LED 395 nm cured compositions, haze values were higher for the low concentration inventive compositions after curing, which may be due to the interaction of the acrylic backbone with the urethane (meth)acrylate oligomers, which may indicate a small degree of incompatibility. The haze values were notably lower for the compositions containing higher concentrations of RAC 1, which may be due to better compatibility with the matrix as concentration is increased. Adhesion improved at higher concentrations of RAC 1 due to the low $T_g$ nature of the backbone. For the LC6 Fusion H-bulb cured compositions, surface tack was low and surface

hardness was high for the UA formulations, indicating a fully cross-linked system.

**Table 6. Properties of Cured Compositions Including RAC 1 or ITX as the Photoinitiator (LC6 Fusion H-bulb Cured)**

| | C1 | C2 | I1 | 12 | C3 | C4 | 13 | 14 |
|---|---|---|---|---|---|---|---|---|
| Formulation | Clear | Clear | Cloudy | Cloudy | Clear | Clear | Slightly Cloudy | Slightly Cloudy |
| Initial Color (APHA, 10 mm) | 108.5 | 152.2 | 31.53 | 36.13 | 149.7 | 171.8 | 22.75 | 14.56 |
| Initial Haze | 0.87 | 2.90 | 40.24 | 35.44 | 0.19 | 0.13 | 19.19 | 12.45 |
| Initial Yellowness (b*) | 4.06 | 5.56 | 1.01 | 1.16 | 5.53 | 6.28 | 0.76 | 0.57 |
| Surface Tack | 1.5 | 0 | 4 | 1.5 | 1 | 0 | 3 | 1.5 |
| Hardness (Konig, ASTM D4366) | 16 | 96 | 15 | 61 | 16 | 121 | 15 | 63 |
| Adhesion (Cross Hatch, ASTM D3359) | 1 | 0 | 0 | 1 | 0.5 | 0 | 2.5 | 5 |

**Table 7. Properties of Cured Compositions Including RAC 1 or ITX as the Photoinitiator (Phoseon LED 395 nm Cured)**

| | C1 | C2 | I1 | I2 | C3 | C4 | I3 | I4 |
|---|---|---|---|---|---|---|---|---|
| Formulation | Clear | Clear | Slightly Cloudy | Slightly Cloudy | Clear | Clear | Clear | Clear |
| Initial Color (APHA, 10 mm) | 109.6 | 57.64 | 6.01 | 6.76 | 115.5 | 66.28 | 3.35 | 6.57 |
| Initial Haze | 0.62 | 2.08 | 22.21 | 27.14 | 0.24 | 0.71 | 7.03 | 19.22 |
| Initial Yellowness (b*) | 8.06 | 4.31 | 0.33 | 0.43 | 8.45 | 4.90 | 0.23 | 0.46 |
| Surface Tack | 2 | 1 | 4 | 3 | 2 | 1 | 5 | 4 |
| Hardness (Konig, ASTM D4366) | 13 | 36 | 4 | 2 | 8 | 35 | 5 | 2 |
| Adhesion (Cross Hatch, ASTM D3359) | 0 | 1 | 4 | 5 | 0 | 5 | 5 | 5 |

To further elucidate why the cured compositions comprising RAC 1 exhibited significantly lower yellowing than the cured compositions comprising ITX, further comparative compositions were prepared. In particular, curable compositions comprising CMTX and PA 1 as small molecule photoinitiators were prepared with the same mixture of monomers as the above compositions. The two different weight percentages gave an active amount of chromophore of 0.2% or 0.5%. MEK was left in the system to evaporate off, similar to the inventive compositions discussed above. The comparative compositions are shown in Table 8 and denoted as Comparative 5 (C5), Comparative 6 (C6), Comparative 7 (C7), Comparative 8 (C8), Comparative 9 (C9), Comparative 10 (C10), Comparative 11 (C11), and Comparative 12 (C12).

**Table 8. Curable compositions Including CMTX or PA 1 as the Photoinitiator.**

| | C5 | C6 | C7 | C8 | C9 | C10 | C11 | C12 |
|---|---|---|---|---|---|---|---|---|
| UMA | 16.25 | | 16.25 | | 12.5 | | 12.5 | |
| UA | | 16.25 | | 16.25 | | 12.5 | | 12.5 |
| HEMA | 2.5 | 2.5 | 2.5 | 2.5 | 2.5 | 2.5 | 2.5 | 2.5 |
| IBOMA | 2.5 | 2.5 | 2.5 | 2.5 | 2.5 | 2.5 | 2.5 | 2.5 |

(continued)

| | C5 | C6 | C7 | C8 | C9 | C10 | C11 | C12 |
|---|---|---|---|---|---|---|---|---|
| MEK | 2.75 | 2.75 | 2.75 | 2.75 | 6.875 | 6.875 | 6.875 | 6.875 |
| CMTX | 0.05 | 0.05 | | | 0.125 | 0.125 | | |
| PA 1 | | | 0.05 | 0.05 | | | 0.125 | 0.125 |
| Total | 25 | 25 | 25 | 25 | 25 | 25 | 25 | 25 |

The compositions were cured via Fusion H-bulb and the performance properties of the resulting cured compositions are shown in Table 9. The initial color of the films after photocuring all C5 - C12 was again shown to be much greater than 100 (APHA, 10mm) compared to less than 50 for each of the inventive compositions. The initial yellowness (b*) values of the films after photocuring was greater than 6 for all comparative compositions, compared with less than 1.2 for the inventive compositions. Similar to the earlier compositions, surface tack was low and surface hardness was high for the UA formulations, indicating a fully cross-linked system.

**Table 9. Properties of Cured Compositions Including CMTX or PA 1 as the Photoinitiator (LC6 Fusion H-bulb)**

| | C5 | C6 | C7 | C8 | C9 | C10 | C11 | C12 |
|---|---|---|---|---|---|---|---|---|
| Formulation | Clear | Clear | Clear | Clear | Clear | Clear | Clear | Clear |
| Initial Color (APHA, 10 mm) | 184.0 | 252.2 | 171.6 | 252.7 | 293.8 | 514.7 | 307.6 | 612.3 |
| Initial Haze | 0.24 | 0.32 | 0.30 | 0.40 | 0.56 | 0.84 | 0.52 | 0.98 |
| Initial Yellowness (b*) | 6.66 | 8.82 | 6.29 | 8.88 | 10.68 | 17.35 | 11.18 | 20.52 |
| Surface Tack | 1 | 0 | 1 | 0 | 1 | 0 | 1 | 0 |
| Hardness (Konig, ASTM D4366) | 11 | 67 | 10 | 64 | 5 | 72 | 4 | 68 |
| Adhesion (Cross Hatch, ASTM D3359) | 3 | 2 | 4 | 1 | 5 | 5 | 5 | 1 |

Further comparative curable compositions were prepared that included both small molecule PA 1 along with a non-reactive acrylic copolymer with the same backbone components as RAC 1, but without a PA 1 moiety connected to the backbone. By testing this control, it can be understood whether the acrylic copolymer backbone is playing a role in the low initial yellowing. The comparative compositions, which were prepared with the same mixture of monomers as the above compositions, are shown in Table 10 and denoted as Comparative 13 (C13), Comparative 14 (C14), Comparative 15 (C15), and Comparative 16 (C16).

**Table 10. Curable compositions Including PA 1 and Non-reactive Acrylic Copolymer.**

| | C13 | C14 | C15 | C16 |
|---|---|---|---|---|
| UMA | 16.25 | | 12.5 | |
| UA | | 16.25 | | 12.5 |
| HEMA | 2.5 | 2.5 | 2.5 | 2.5 |
| IBOMA | 2.5 | 2.5 | 2.5 | 2.5 |
| PA 1 | 0.05 | 0.05 | 0.125 | 0.125 |
| Non-reactive acrylic copolymer in MEK | 2.8 | 2.8 | 7.0 | 7.0 |
| Total | 25 | 25 | 25 | 25 |

The curable compositions were cured via Fusion H-bulb and the performance properties of the resulting cured

compositions are shown in Table 11. The performance properties of the coatings compositions containing PA 1 along with the non-reactive acrylic copolymer are shown in Table 11. The initial color of the films after photocuring all C13 - C16 was again shown to be much greater than 100 (APHA, 10mm) compared to less than 50 for each of the inventive compositions. The initial yellowness (b*) values of the films after photocuring was again greater than 6 for all comparative compositions, compared with less than 1.2 for the inventive compositions.

**Table 11. Properties of Cured Compositions Including PA 1 and non-reactive acrylic copolymer (LC6 Fusion H-bulb)**

| | C13 | C14 | C15 | C16 |
|---|---|---|---|---|
| Formulation | Clear | Clear | Clear | Clear |
| Initial Color (APHA, 10 mm) | 255.2 | 379.7 | 206.7 | 335.3 |
| Initial Haze | 37.05 | 30.34 | 49.61 | 61.57 |
| Initial Yellowness (b*) | 8.87 | 12.96 | 7.31 | 11.44 |
| Surface Tack | 1 | 0 | 1 | 0 |
| Hardness (Konig, ASTM D4366) | 13 | 96 | 9 | 103 |
| Adhesion (Cross Hatch, ASTM D3359) | 1 | 5 | 1 | 5 |

The UMA compositions seem to have lower initial yellowing compared to the UA compositions. This may be due to the differences in the polyol backbone for each of the urethane (meth)acrylate oligomers. The UMA backbone has a polyol that has the ability to undergo hydrogen abstraction easier than the polyol in the UA backbone. Still, initial yellowing is elevated in C13 and C15 compared with the inventive compositions indicating that the use of RAC 1 as the photoinitiator provides lower yellowing than the combination of PA 1 and non-reactive acrylic copolymer. Without being bound by theory, it is believed that having the PA 1 moiety bound to the backbone of RAC 1 reduces the probability of the PA 1 moiety dimerizing, which is a source of yellowing.

Further aspects of the invention are provided by the subject matter of the following clauses:

Clause 1. An acrylic copolymer comprising the reaction product of: a high-$T_g$ monomer having a glass transition temperature ($T_g$) equal to or greater than 25 °C, a low-$T_g$ monomer having a $T_g$ less than 25 °C, or a combination of a high-$T_g$ monomer having a glass transition temperature ($T_g$) equal to or greater than 25 °C and a low-$T_g$ monomer having a $T_g$ less than 25 °C; a chromophore monomer comprising a pendant moiety chosen from a thioxanthone, an anthraquinone, or a camphorquinone; and an optional additional monomer.

Clause 2. The acrylic copolymer of clause 1, wherein the oligomer has formula (I) as provided herein, where: $A^1$ is $(C_0\text{-}C_{30})$hydrocarbyl or $(C_1\text{-}C_{30})$heterohydrocarbyl; $A^2$ is $(C_4\text{-}C_{30})$hydrocarbyl or $(C_4\text{-}C_{30})$heterohydrocarbyl; $A^3$ is a residue comprising a monovalent radical comprising a pendant moiety chosen from a thioxanthone, an anthraquinone, or a camphorquinone; $A^4$ is a $(C_0\text{-}C_{30})$hydrocarbyl or $(C_1\text{-}C_{30})$heterohydrocarbyl; $Z^1$, $Z^2$, $Z^3$, and $Z^4$ are independently -H or $(C_1\text{-}C_4)$alkyl; m is a weight fraction of the high-$T_g$ monomer and is from 0 to 0.999; n is a weight fraction of the low-$T_g$ monomer and is from 0 to 0.999; p is a weight fraction of the chromophore monomer and is from 0.001 to 0.4; q is a weight fraction of the additional monomer and is from 0 to 0.2; m + n is greater than or equal to 0.4; and m + n + p + q is equal to 1.

Clause 3. The acrylic copolymer of clause 2, wherein: m is from 0.001 to 0.999; and n is from 0.001 to 0.999; and m + n is greater than or equal to 0.6.

Clause 4. The acrylic copolymer of clauses 2 or 3, wherein $Z^1$ is methyl, $A^1$ is methyl, and $A^2$ is n-butyl.

Clause 5. The acrylic copolymer of any of clauses 2 to 4, wherein $A^3$ is a monovalent radical comprising a pendant thioxanthone.

Clause 6. The acrylic copolymer of any of clauses 2 to 5, wherein $A^3$ has formula (II) as described herein.

Clause 7. The acrylic copolymer of any of clauses 2 to 6, wherein q is 0.

Clause 8. The acrylic copolymer of any of the preceding clauses, wherein $A^1$ is methyl, $A^2$ is n-butyl, and $A^3$ has formula (II), formula (III), or formula (IV) as described herein.

Clause 9. The acrylic copolymer of any of the preceding clauses, wherein $Z^1$ is methyl, $Z^2$ is -H, and $Z^3$ is -H.

Clause 10. The acrylic copolymer of any of the preceding clauses, wherein q is not equal to zero and the at least one additional monomer comprises at least one amine synergist monomer.

Clause 11. The acrylic copolymer of any of the preceding clauses, comprising high-$T_g$ monomers and low-$T_g$ monomers, wherein the Fox Equation average $T_g$ of the high-$T_g$ monomers is at least 20 °C greater than the Fox Equation average $T_g$ of the low-$T_g$ monomers.

Clause 12. The acrylic copolymer of any of the preceding clauses, comprising high-$T_g$ monomers and low-$T_g$ monomers, wherein the difference between the Fox Equation average $T_g$ of the high-$T_g$ monomer units and the Fox Equation average $T_g$ of the low-$T_g$ monomer units is from 20 °C to 200 °C.

Clause 13. The acrylic copolymer of any of the preceding clauses, comprising at least two discrete types of high $T_g$ monomers.

Clause 14. The acrylic copolymer of any of the preceding clauses, comprising at least two discrete types of low $T_g$ monomers.

Clause 15. The acrylic copolymer of any of the preceding clauses, wherein comprising high-$T_g$ monomers and low-$T_g$ monomers, wherein the weight ratio of low $T_g$ monomers to high $T_g$ monomer units in the acrylic copolymer is from 10:1 to 1:9.

Clause 16. The acrylic copolymer of any of the preceding clauses, comprising at least one high-$T_g$ monomer chosen from 2-phenylethyl methacrylate, neopentyl methacrylate, 3,3,5-trimethylcyclohexyl acrylate, tert-butyl methacrylate, octadecyl methacrylate, octadecyl acrylate, glycidyl methacrylate, propyl methacrylate, tetrahydrofurfuryl methacrylate, benzyl methacrylate, isobutyl methacrylate, glycidyl methacrylate, ethyl methacrylate, 2,2,3,3-tetrafluoropropyl methacrylate, 2-hydroxypropyl methacrylate, 2,2,2-trifluoroethyl methacrylate, 2-hydroxyethyl methacrylate, isopropyl methacrylate, isobornyl acrylate, methyl (meth)acrylate, butyl cyanoacrylate, isobornyl methacrylate, phenyl methacrylate, 2-cyanobutyl acrylate, tert-butyl methacrylate, cyclohexyl acrylate, cyclohexyl methacrylate, 4-tert-butylcyclohexyl acrylate, 4-tert-butylcyclohexyl methacrylate, ethyl cyanoacrylate, methyl cyanoacrylate, 3,3,5-trimethylcyclohexyl acrylate, 3,3,5-trimethylcyclohexyl methacrylate, a substituted or unsubstituted ($C_6$-$C_{12}$)cycloalkyl (meth)acrylate, adamantyl (meth)acrylate, or combinations thereof.

Clause 17. The acrylic copolymer of any of the preceding clauses, comprising at least one low $T_g$ monomer chosen from n-butyl (meth)acrylate, isobutyl (meth)acrylate, hexyl (meth)acrylate, 2-ethylhexyl (meth)acrylate, isooctyl (meth)acrylate, isodecyl (meth)acrylate, tridecyl (meth)acrylate, lauryl (meth)acrylate, nonyl acrylate, decyl (meth)acrylate, hexyl (meth)acrylate, dodecyl (meth)acrylate, butyl acrylate, 2-ethylhexyl acrylate, octyl (meth)acrylate, propyl acrylate, 4-cyanobutyl acrylate, isobutyl acrylate, 2,2,3,3-tetrafluoropropyl acrylate, ethyl acrylate, sec-butyl acrylate, dodecyl acrylate, tetrahydro furfuryl acrylate, tetradecyl (meth)acrylate, isopropyl acrylate, pentyl (meth)acrylate, 2-cyanoethyl acrylate, benzyl acrylate, phenoxyethyl acrylate, cyclohexyl acrylate, hexadecyl (meth)acrylate, 1-(dimethylamino)ethyl (meth)acrylate, 1-(diethylamino)ethyl (meth)acrylate, cyanomethyl acrylate, 2-methyl butyl acrylate, 2-octyl acrylate, or combinations thereof.

Clause 18. The acrylic copolymer of any of the preceding clauses, comprising at least one chromophore monomer according to formula (II), (IIa), or (IIb), as described herein.

Clause 19. The acrylic copolymer of any of the preceding clauses, comprising at least one additional monomer chosen from a caprolactone-extended acrylate (SR49B, Sartomer), cyclic trimethylolpropane formal acrylate (SR531, Sartomer) propoxylated tetrahydrofurfuryl acrylate (SR611, Sartomer), beta-carboxyethylacrylate, glycidyl methacrylate, or 2-(2-ethoxyethoxy)ethyl acrylate (SR256).

Clause 20. The acrylic copolymer of any of the preceding clauses, comprising at least one additional monomer chosen from dimethylaminoethylacrylate (DMAEMA), dimethylaminoethylmethacrylate (DMAEA), N-vinylpyrrolidone (NVP), N-vinylcaprolactam (VCAP), acryloxymorpholine (ACMO), dimethyl acrylamide (DMAC), and poly(ethylenoxide)monoacrylate.

Clause 21. The acrylic copolymer of any of the preceding clauses, comprising at least one additional monomer chosen from aminobenzoates, polymerizable aminobenzoates, polymeric aminobenzoates and mixtures thereof.

Clause 22. The acrylic copolymer of any of the preceding clauses, wherein the acrylic copolymer has a glass transition temperature $T_g$ equal to or less than -10 °C.

Clause 23. A cured composition that is a product of photocuring a composition comprising: an acrylic copolymer according to any of clauses 1 to 22; and at least one (meth)acrylate monomer, or at least one (meth)acrylate oligomer, or both; wherein the cured composition exhibits: an APHA-10 mm initial color from 0.1 to 50; an initial yellowness (b*) from 0.01 to 2; and a $T_g$ of equal to or greater than 0 °C.

Clause 24. The cured composition of clause 23, wherein the cured composition exhibits an APHA-10 mm initial color from 0.1 to 40.

Clause 25. The cured composition of clause 23 or 24, wherein the cured composition exhibits an initial yellowness (b*) from 0.01 to 1.2.

Clause 26. The cured composition of any of clauses 23 to 25, wherein the composition does not comprise a tertiary amine synergist.

Clause 27. The cured composition of any of clauses 23 to 26, wherein the composition does not comprise a small molecule photoinitiator.

Clause 28. The cured composition of any of clauses 23 to 27, wherein the at least one (meth)acrylate oligomer is included and is chosen from at least one of urethane acrylate and urethane methacrylate, and the at least one (meth)acrylate monomer is included and is chosen from at least one of 2-hydroxyethyl methacrylate and isobornyl methacrylate.

Clause 29. The cured composition of any of clauses 23 to 28, wherein the acrylic copolymer has a weight average molecular weight of at least 10,000 g/mol.

Clause 30. A method of coating a substrate, the method comprising: applying a composition to a substrate to form an uncured coating of the composition on the substrate, the composition comprising: the acrylic copolymer according to any of clauses 1 to 22; and at least one (meth)acrylate monomer; and exposing the uncured coating to UV radiation to cure the composition and obtain a cured coating on the substrate.

Clause 31. The method of clause 30, wherein the substrate is chosen from glass, polycarbonate, PET, polyethylene, polypropylene, metals, human and synthetic fingernails, paper and products including cardboard and paperboard, and ceramics.

It will be apparent to persons of ordinary skill in the art that various modifications and variations can be made without departing from the scope disclosed herein. Since modifications, combinations, sub-combinations, and variations of the disclosed embodiments, which incorporate the spirit and substance disclosed herein, may occur to persons of ordinary skill in the art, the scope disclosed herein should be construed to include everything within the scope of the appended claims and their equivalents.

For the purposes of defining the present technology, the transitional phrase "consisting of' may be introduced in the claims as a closed preamble term limiting the scope of the claims to the recited components or steps and any naturally occurring impurities. For the purposes of defining the present technology, the transitional phrase "consisting essentially of' may be introduced in the claims to limit the scope of one or more claims to the recited elements, components, materials, or method steps as well as any non-recited elements, components, materials, or method steps that do not materially affect the novel characteristics of the claimed subject matter.

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

It should be understood that any two quantitative values assigned to a property may constitute a range of that

property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment.

## Claims

1. An acrylic copolymer comprising the reaction product of:

   a high-$T_g$ monomer having a glass transition temperature ($T_g$) equal to or greater than 25 °C, a low-$T_g$ monomer having a $T_g$ less than 25 °C, or a combination of a high-$T_g$ monomer having a glass transition temperature ($T_g$) equal to or greater than 25 °C and a low-$T_g$ monomer having a $T_g$ less than 25 °C;
   a chromophore monomer comprising a pendant moiety chosen from a thioxanthone, an anthraquinone, or a camphorquinone; and
   an optional at least one additional monomer.

2. The acrylic copolymer of claim 1, wherein the oligomer has formula (I):

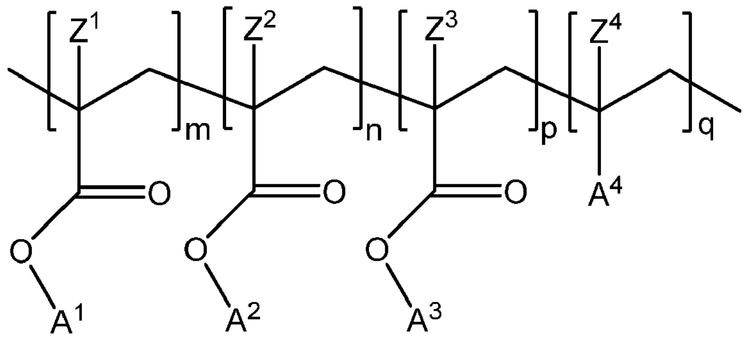

(I)

   where:

   $A^1$ is $(C_1\text{-}C_{30})$hydrocarbyl or $(C_1\text{-}C_{30})$heterohydrocarbyl;
   $A^2$ is $(C_4\text{-}C_{30})$hydrocarbyl or $(C_4\text{-}C_{30})$heterohydrocarbyl;
   $A^3$ is a residue comprising a monovalent radical comprising a pendant moiety chosen from a thioxanthone, an anthraquinone, or a camphorquinone;
   $A^4$ is a $(C_0\text{-}C_{30})$hydrocarbyl or $(C_1\text{-}C_{30})$heterohydrocarbyl;
   $Z^1$, $Z^2$, $Z^3$, and $Z^4$ are independently -H or $(C_1\text{-}C_4)$alkyl;
   m is a weight fraction of the high-$T_g$ monomer and is from 0 to 0.999;
   n is a weight fraction of the low-$T_g$ monomer and is from 0 to 0.999;
   p is a weight fraction of the chromophore monomer and is from 0.001 to 0.4;
   q is a weight fraction of the at least one additional monomer and is from 0 to 0.2;
   m + n is greater than or equal to 0.4; and
   m + n + p + qis equal to 1.

3. The acrylic copolymer of claim 2, wherein:

   m is from 0.001 to 0.999; and
   n is from 0.001 to 0.999;
   m + n is greater than or equal to 0.6.

4. The acrylic copolymer of claims 2 or 3, wherein $Z^1$ is methyl, $A^1$ is methyl, and $A^2$ is n-butyl.

5. The acrylic copolymer of any of claims 2 to 4, wherein $A^3$ is a monovalent radical comprising a pendant thioxanthone.

6. The acrylic copolymer of any of claims 2 to 5, wherein $A^3$ has formula (II) or (III):

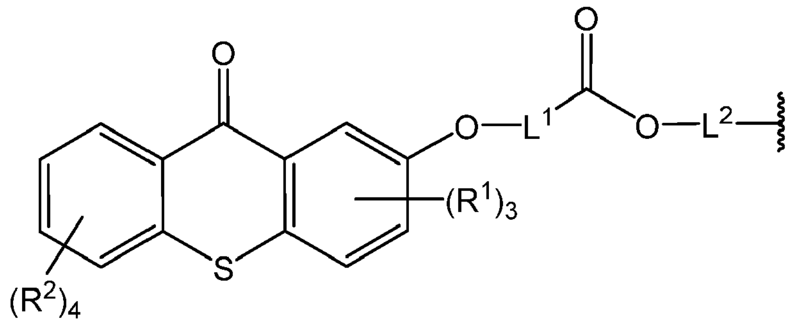

(II)

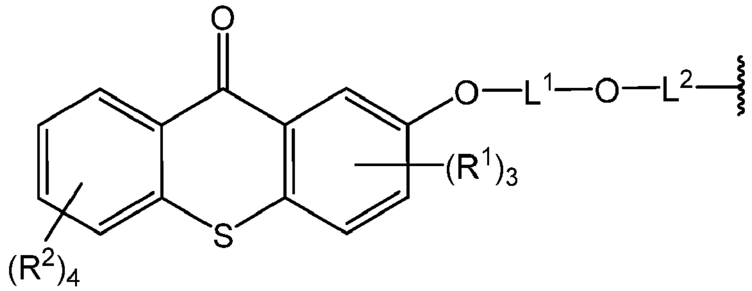

(III)

where, in formula (II) and formula (III):

$L^1$ is an alkylene;
$L^2$ is a divalent linker comprising at least 2 carbon atoms;
each $R^1$ and $R^2$ are independently selected from -H, halogen, alkyl, cycloalkyl, heterocycloalkyl, alkoxy, aryloxy, thioalkyl, thioaryl, alkenyl, alkynyl, aryl, aralkyl, alkaryl, heteroaryl, -C(=O)$R^a$, -N$R^b$$R^c$, alkylamino, alkylthiol, haloalkyl, -$NO_2$, -CN, -C(=O)O$R^d$, -C(=O)N$R^b$$R^c$;
$R^a$ is selected from an optionally substituted alkyl, an optionally substituted cycloalkyl, an optionally substituted heterocycloalkyl and an optionally substituted aryl; and
$R^b$, $R^c$ and $R^d$ are independently selected from -H, alkyl and aryl.

**7.** The acrylic copolymer of any of claims 2 to 6, wherein q is 0.

**8.** A cured composition that is a product of photocuring a composition comprising:

an acrylic copolymer according to any of claims 1 to 7; and
at least one (meth)acrylate monomer or at least one (meth)acrylate oligomer, or both;

wherein the cured composition exhibits:

an APHA-10 mm initial color from 0.1 to 50;
an initial yellowness (b*) from 0.01 to 2; and
a $T_g$ of equal to or greater than 0 °C.

**9.** The cured composition of claim 8, wherein the cured composition exhibits an APHA-10 mm initial color from 0.1 to 40.

**10.** The cured composition of claim 8 or 9, wherein the cured composition exhibits an initial yellowness (b*) from 0.01 to 1.2.

**11.** The cured composition of any of claims 8 to 10, wherein the composition does not comprise a tertiary amine synergist.

**12.** The cured composition of any of claims 8 to 11, wherein the composition does not comprise a small molecule photoinitiator.

**13.** The cured composition of any of claims 8 to 12, wherein the at least one (meth)acrylate oligomer is included and is

chosen from at least one of urethane acrylate and urethane methacrylate, and the at least one (meth)acrylate monomer is included and is chosen from at least one of 2-hydroxyethyl methacrylate and isobornyl methacrylate.

**14.** The cured composition of any of claims 8 to 13, wherein the acrylic copolymer has a weight average molecular weight of at least 10,000 g/mol.

**15.** A method of coating a substrate, the method comprising:

applying a composition to a substrate to form an uncured coating of the composition on the substrate, the composition comprising:

the acrylic copolymer according to any of claims 1 to 7; and
at least one (meth)acrylate monomer; and

exposing the uncured coating to UV radiation to cure the composition and obtain a cured coating on the substrate.

Europäisches Patentamt
European Patent Office
Office européen des brevets

# EUROPEAN SEARCH REPORT

Application Number
EP 22 30 6080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CATALINA F ET AL: "Polymeric photoinitiators based on thioxanthone: Photochemistry and free radical photoinitiation study by photodilatometry of the polymerization of methyl methacrylate", EUROPEAN POLYMER JOURNAL, PERGAMON PRESS LTD OXFORD, GB, vol. 28, no. 12, 1 December 1992 (1992-12-01), pages 1533-1537, XP024056011, ISSN: 0014-3057, DOI: 10.1016/0014-3057(92)90147-T [retrieved on 1992-12-01] | 1,2,4,5, 7-10,12, 14 | INV. C08F2/48 C08F220/18 C08F265/06 C09D4/06 |
| Y | * scheme 1, section 3.3; tables 1-4 * ----- | 1-15 | |
| | -/-- | | |

TECHNICAL FIELDS SEARCHED (IPC)

C08F
C09D

The present search report has been drawn up for all claims

| Place of search | Date of completion of the search | Examiner |
|---|---|---|
| The Hague | 27 January 2023 | Dessemond, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 30 6080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Angiolini Luigi ET AL: "Synthesis and photoinitiation activity of radical polymeric photoinitiators bearing side-chain camphorquinone moieties",<br>,<br>31 December 2000 (2000-12-31), pages 2646-2653, XP093018065,<br>DOI: doi/10.1002/1521-3935(20001201)201:18<2646::AID-MACP2646>3.0.CO;2-D<br>Retrieved from the Internet:<br>URL:https://onlinelibrary.wiley.com/doi/10.1002/1521-3935(20001201)201:18%3C2646::AID-MACP2646%3E3.0.CO;2-D<br>[retrieved on 2023-01-26]<br>* abstract *<br>* introduction *<br>* last paragraph;<br>page 2648 *<br>* chart 1, poly(MCQ-co-DMAEM-co-BM;<br>page 2651 - page 2653; figure 2; tables 1,2 *<br>----- | 1-3, 7-10,12, 14,15 | |
| | | | TECHNICAL FIELDS SEARCHED (IPC) |
| A | US 5 337 746 A (YOUNG HOWARD L [GB] ET AL)<br>16 August 1994 (1994-08-16)<br>* examples 13,18 *<br>----- | 1-15 | |
| A | JP 2009 184989 A (TOYO INK MFG CO)<br>20 August 2009 (2009-08-20)<br>* compounds 1-19;<br>table 1 *<br>* paragraphs [0188] - [0193] *<br>* examples 1-24; tables 3,4 *<br>----- | 1-15 | |
| X | EP 0 341 560 A2 (MERCK PATENT GMBH [DE])<br>15 November 1989 (1989-11-15)<br>* claims 1-8; examples 1,2 *<br>-----<br>-/-- | 1,2,5,7, 15 | |

The present search report has been drawn up for all claims

| Place of search | Date of completion of the search | Examiner |
|---|---|---|
| The Hague | 27 January 2023 | Dessemond, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 30 6080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/216265 A1 (HENKEL IP & HOLDING GMBH [DE]; JIN SHUHUA [US]) 28 October 2021 (2021-10-28) * paragraphs [0001], [0013] - [0016], [0092], [0115] - [0017] * * entries 19-21; example 7 * ----- | 1-15 | |
| X | CHRISTIAN DOLLENDORF ET AL: "Polymerization of novel methacrylated anthraquinone dyes", BEILSTEIN JOURNAL OF ORGANIC CHEMISTRY, vol. 9, 28 February 2013 (2013-02-28), pages 453-459, XP055464853, DOI: 10.3762/bjoc.9.48 * scheme 1; page 457; figure 3 * ----- | 1 | |
| Y | WO 2015/083663 A1 (SEKISUI CHEMICAL CO LTD [JP]) 11 June 2015 (2015-06-11) * examples 3,13-16; tables 1,2 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 27 January 2023 | Dessemond, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

# ANNEX TO THE EUROPEAN SEARCH REPORT ON EUROPEAN PATENT APPLICATION NO. EP 22 30 6080

This annex lists the patent family members relating to the patent documents cited in the above-mentioned European search report. The members are as contained in the European Patent Office EDP file on
The European Patent Office is in no way liable for these particulars which are merely given for the purpose of information.

27-01-2023

| Patent document cited in search report | | Publication date | Patent family member(s) | | | Publication date |
|---|---|---|---|---|---|---|
| US 5337746 | A | 16-08-1994 | AU | 641621 | B2 | 30-09-1993 |
| | | | EP | 0430988 | A1 | 12-06-1991 |
| | | | JP | H04500019 | A | 09-01-1992 |
| | | | US | 5337746 | A | 16-08-1994 |
| | | | WO | 9001292 | A1 | 22-02-1990 |
| JP 2009184989 | A | 20-08-2009 | JP | 5223365 | B2 | 26-06-2013 |
| | | | JP | 2009184989 | A | 20-08-2009 |
| EP 0341560 | A2 | 15-11-1989 | AU | 627177 | B2 | 20-08-1992 |
| | | | CA | 1336091 | C | 27-06-1995 |
| | | | DD | 283825 | A5 | 24-10-1990 |
| | | | DE | 3816304 | A1 | 23-11-1989 |
| | | | EP | 0341560 | A2 | 15-11-1989 |
| | | | FI | 892302 | A | 14-11-1989 |
| | | | JP | 2769628 | B2 | 25-06-1998 |
| | | | JP | H01319504 | A | 25-12-1989 |
| | | | KR | 890017278 | A | 15-12-1989 |
| WO 2021216265 | A1 | 28-10-2021 | BR | 112022017373 | A2 | 13-12-2022 |
| | | | CA | 3174876 | A1 | 28-10-2021 |
| | | | CN | 115427134 | A | 02-12-2022 |
| | | | KR | 20230002373 | A | 05-01-2023 |
| | | | TW | 202208453 | A | 01-03-2022 |
| | | | WO | 2021216265 | A1 | 28-10-2021 |
| WO 2015083663 | A1 | 11-06-2015 | CN | 105683225 | A | 15-06-2016 |
| | | | JP | 6434901 | B2 | 05-12-2018 |
| | | | JP | WO2015083663 | A1 | 16-03-2017 |
| | | | KR | 20160094929 | A | 10-08-2016 |
| | | | TW | 201538461 | A | 16-10-2015 |
| | | | WO | 2015083663 | A1 | 11-06-2015 |

EPO FORM P0459

For more details about this annex : see Official Journal of the European Patent Office, No. 12/82